# EUROPEAN PATENT SPECIFICATION

(11) **EP 1 865 423 B1**
(45) Date of publication and mention of the grant of the patent: **19.11.2008**
(21) Application number: 06115253.4
(22) Date of filing: 09.06.2006
(51) Int. Cl.: G06F 17/30

(54) **Software and Device for refreshing Markup Language-Based Database Queries Independently from User Interface Screens**
Software und Vorrichtung zur Auffrischung von auf Markierungssprache basierenden Datenbankabfragen unabhängig von grafischen Benutzeroberflächen
Logiciel et dispositif pour rafraichir des requêtes de bases de données basées sur un langage de balisage indépendement d'ecrans d'interface utilisateur

(43) Date of publication of application: 12.12.2007
(73) Proprietor: Nextair Corporation, Waterloo, ON N2L 3W8 (CA)
(72) Inventor: Neil, Tim, Mississauga Ontario L5M 7H2 (CA)
(74) Representative: Rickard, David John

(56) References cited:
- WO-A2-01/50712
- US-A1- 2003 167 315
- US-A1- 2006 047 665

## Description

The present disclosure preferably relates to software and a device for effecting database queries and user interface screens that are independently refreshable and are markup language-based.

A software application may use a database for the purpose of storing or accessing application data. Executable code within the application may compose and submit queries to a database management system which retrieves application data matching specified search parameters from the database as required by the application. The purpose of a database query may be to obtain application data for populating the textual fields or other display elements of a graphical user interface (GUI) screen. In this case, the executable code that composes and submits a database query may be automatically executed every time the GUI screen is presented by the application, to ensure the currency of the application data to be displayed on the screen. If a user navigates to the same GUI screen more than once, the database query may be re-executed ("refreshed") each time the screen is redisplayed. This approach may be inefficient in some situations however, such as when the database is not updated frequently.

When a software application that performs database queries and displays user interface screens is to be executed by a wireless communication device, the application may initially be downloaded to the device via a wireless network. Because the cost of data transmission over a wireless network may be based upon the amount of data transmitted, it may be desirable to download the application with a minimal amount of data transmission.

A solution which addresses at least some of these concerns would be desirable.

### BRIEF DESCRIPTION OF THE DRAWINGS

In the figures which illustrate example embodiments:

FIG. 1 is a schematic diagram illustrating a system for presenting data from a server-based application at a wireless communication device;

FIG. 2 is a schematic diagram illustrating a wireless communication device component of the system of FIG. 1 including virtual machine software;

FIG. 3 is a schematic diagram illustrating the virtual machine software of FIG. 2 in greater detail;

FIG. 4 is a schematic diagram illustrating a rapid application development (RAD) tool component of the system of FIG. 1 in greater detail;

FIG. 5 illustrates a graphical user interface (GUI) of the RAD tool component of FIG. 4;

FIGS. 6 and 7 illustrate portions of the GUI of FIG. 5 in greater detail;

FIG. 8 illustrates a GUI screen presented at the wireless communication device of FIG. 1 at run time along with a database table used to populate the GUI screen;

FIG. 9 illustrates the GUI screen and database table of FIG. 8 at a later point in time;

FIGS. 10A-10B illustrate an application definition file markup language document which governs the operation of one of the wireless communication devices of FIG. 1;

FIG. 11 is a pseudocode representation of an object-oriented Query class which may be instantiated at one of the wireless communication devices of FIG. 1;

FIGS. 12A and 12B is a pseudocode representation of an object-oriented Screen class which may be instantiated at one of the wireless communication devices of FIG. 1;

FIG. 13 is a pseudocode representation of an object-oriented Editbox class which may be instantiated at one of the wireless communication devices of FIG. 1;

FIG. 14 is a pseudocode representation of an object-oriented Button class which may be instantiated at one of the wireless communication devices of FIG. 1;

FIGS. 15A and 15B contain a pseudocode representation of an object-oriented Action class which may be instantiated at one of the wireless communication device of FIG. 1;

FIG. 16 is a pseudocode representation of various general purpose routines which may be executed at one of the wireless communication device of FIG. 1; and

FIG. 17. illustrates an object-oriented class representing a single where parameter of a query.

### DESCRIPTION OF PREFERRED EMBODIMENTS

The present description generally pertains to an approach for effecting a refreshable database query based on a markup language representation thereof. Some embodiments, such as the one described hereinafter, may be implemented in the context of a system for presenting data from a server-based application at a wireless communication device, as described in U.S. Patent Publication No. 2003/0060896 for example.

In one aspect of the below-described embodiment, there is preferably provided a machine-readable medium comprising: object-oriented code for defining a database query based on at least one markup language element representing the database query, the object-oriented code including instructions for causing the database query to be performed and instructions for storing a result of the database query; object-oriented code for displaying a user interface screen having a display element that is based at least in part upon the result of the database query, the user interface screen being based on at least one markup language element representing the user interface screen; object-oriented code for refreshing the user interface screen based on a markup language element representing the refreshing of the user interface screen; and object-oriented code for refreshing the database query based on a markup language element representing the refreshing of the database query,wherein the object-oriented code for refreshing the user interface screen and the object-oriented code for refreshing the database query are capable of mutually exclusive instantiation based upon a user specification of one of the markup language element representing the refreshing of the user interface screen and the markup language element representing the refreshing of the database query.

In another aspect of the below-described embodiment, there is preferably provided a wireless communication device comprising: a processor; and a memory coupled to the at least one processor, storing: object-oriented code for defining a database query based on at least one markup language element representing the database query, the object-oriented code including instructions for causing the database query to be performed and instructions for storing a result of the database query; object-oriented code for displaying a user interface screen having a display element that is based at least in part upon the result of the database query, the user interface screen being based on at least one markup language element representing the user interface screen; object-oriented code for refreshing the user interface screen based on a markup language element representing the refreshing of the user interface screen; and object-oriented code for refreshing the database query based on a markup language element representing the refreshing of the database query, wherein, the object-oriented code for refreshing the user interface screen and the object-oriented code for refreshing the database query are capable of mutually exclusive instantiation based upon a user specification of one of the markup language element representing the refreshing of the user interface screen and the markup language element representing the refreshing of the database query.
Patent publication US2006/0047665A1 deals with a method for simulating a wireless application for deployment on a mobile device.

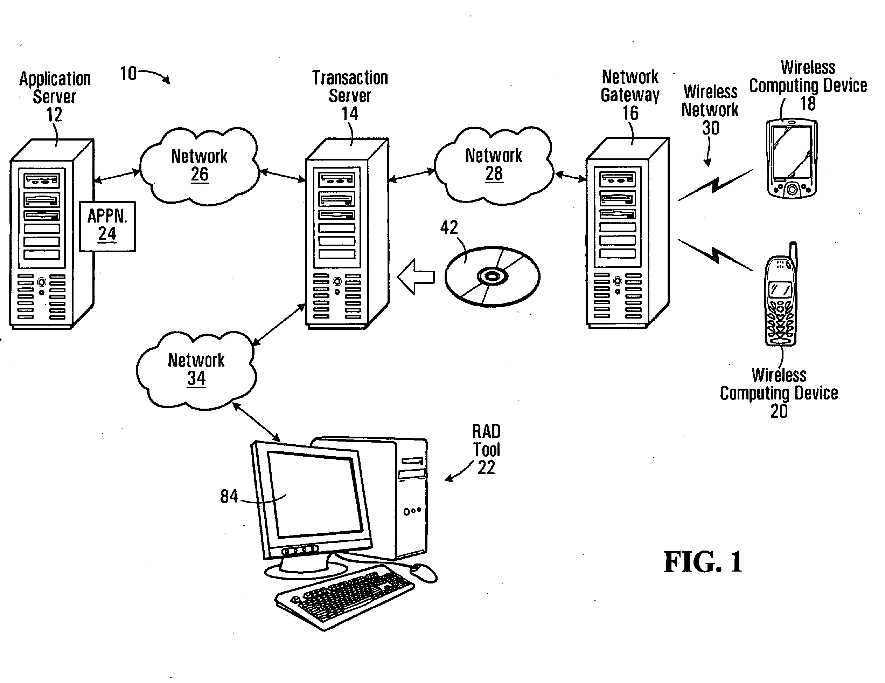

FIG. 1 is a schematic diagram illustrating an exemplary system 10 for presenting data from a server-based application at a wireless communication device. This embodiment is an enhancement of the system described in U.S. Patent Publication No. 2003/0060896 (referred to herein as the "baseline system"). The enhancement permits refreshable database queries to be effected at a wireless communication device.

The system 10 of FIG. 1 includes an application server 12, a transaction server 14, a network gateway 16, a pair of exemplary wireless communication devices (also referred to as "mobile devices" herein and in U.S. Patent Publication No. 2003/0060896) 18 and 20, and a Rapid Application Development (RAD) tool 22. The application server 12, transaction server 14, network gateway 16, and wireless communication devices 18 and 20 are analogous to the application server 70, middleware server 44, network gateway 40, and mobile devices 10 and 30, respectively, of U.S. Patent Publication No. 2003/0060896, and will thus not be described in great detail, except to the degree that these components are modified from their implementation as described in the above-noted publication.

Application server 12 is a server which hosts at least one conventional software application 24 to which wireless communication device access is desired. The application 24 receives and generates data. The role of system 10 is to present data generated by the application 24 at wireless communication devices 18 and/or 20 and to send data generated at wireless communication devices 18 and/or 20 (e.g. responsive to user interaction with the devices) back to the application 24. The application server 12 sends and receives this data to and from transaction server 14 over a data network 26, which may be the Internet or a private data network for example, e.g. using HTTP running on tdp of a standard TCP/IP stack. In the present embodiment, the application 24 is an electronic mail (email) application, however in alternative embodiments, application 24 could be another type of application.

Transaction server 14 corresponds to middleware server 44 of U.S. Patent Publication No. 2003/0060896. As described in that publication, the role of transaction server 14 is essentially twofold. First, the term serve 14 stores application-specific markup language documents (referred to as application definition files in the above-noted U.S. patent publication and hereinafter) for downloading by wireless communication devices 18, 20 desirous of presenting data from an application 24 executing at application server 12. The application definition files dictate the behavior and user interface (GUI) of the wireless communication devices. Second, once presentation of data from application 24 at a wireless communication device 18 or 20 has begun, the transaction server acts as an intermediary for communications between the application server 12 and the wireless communication device 18 or 20.

Network gateway 16 is a gateway between data network 28, which may be the Internet or a private data network for example, and a wireless network 30. In combination, data network 28, network gateway 16, and wireless network 30 facilitate communication of application data between the transaction server 14 and wireless communication devices 18 and 20.

Wireless communication devices 18 and 20 may for example be two-way paging devices, WinCE based devices (e.g. Pocket PC devices), PalmOS devices, WAP enabled mobile telephones, or the like, which are capable of presenting data from remote applications as described in detail in the above-referenced U.S. Patent Publication. Specifically, memory at devices 18 and 20 stores virtual machine software which interprets a textual application definition file downloaded from transaction server 14, describing: a GUI format for an application including control flow between GUI screens; the format of data to be exchanged over the wireless network 30 for the application; and the format of data to be stored in a database at the wireless communication devices 18 and 20. These aspects are described by markup language elements within the application definition file. The GUI screens and screen components presented at the wireless communication device 18 or 20 may emulate the GUI screens and components that a user would see when executing the full application 24 at a desktop computer or workstation. In the illustrated embodiment, wireless communication device 18 is of a different type than device 20, i.e., it executes a different operating system and may have different physical characteristics such as differently sized display screen or different processor.

RAD tool 22 is a computing device 120, such as an Intel®-Processor based personal computer (PC) for example, executing software that allows a developer to create master definition files for uploading to transaction server 14. A master definition file is a markup language document similar to an application definition file, except that its contents may dictate user interface appearance and control flow for more than one type of wireless communication device. Application definition files are created from master definition files at transaction server 14, as described in the above-referenced U.S. Patent Publication No. 2003/0060896. Application definition files 58 are downloaded to wireless communication devices 18 and 20 where they are interpreted by virtual machine software. Uploading of the master definition file to from the RAD tool 22 to the application server 14 may be performed over a data network 34, which may be the Internet or a private data network for example.

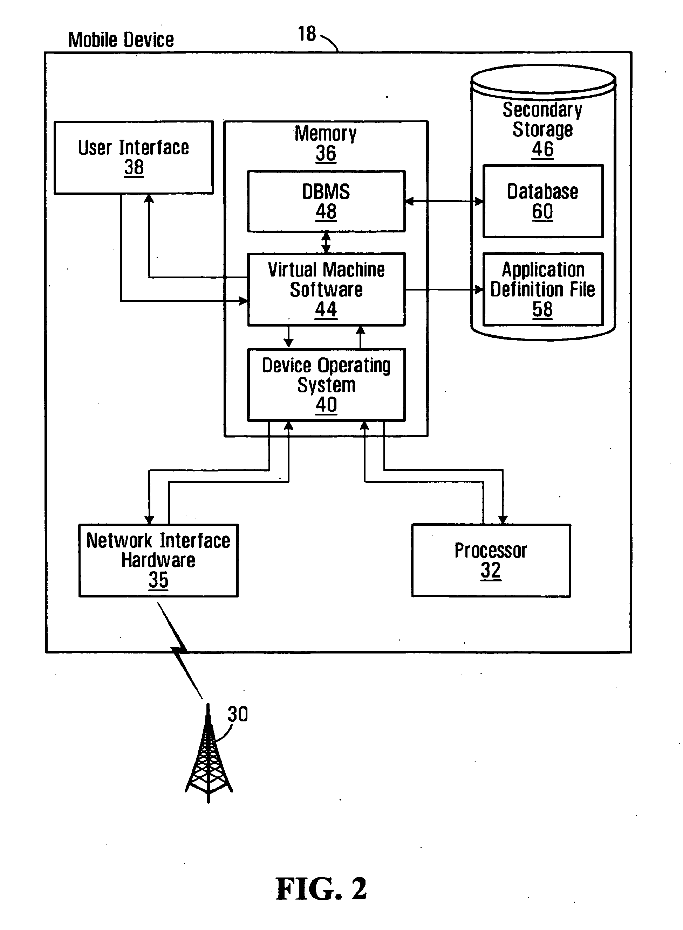

FIG. 2 illustrates wireless communication device 18 in greater detail. Wireless communication device 18 may be any conventional wireless communication device, modified to function in the manner described below. As such, wireless communication device 18 includes a processor 32 in communication with a network interface 35, storage memory 36, a user interface 38, and local storage 46.

Network interface 35 enables device 18 to transmit and receive data over a wireless network 30.

Memory 36 is volatile memory such as static random access memory (SRAM). At run time, memory 36 stores an operating system 40, virtual machine software 44 and a database management system 48.

Operating system 40 is software representing a mobile operating system such as the Palm OS or WinCE operating system. Operating system 40 typically includes graphical user interface and network interface software having suitable application programmer interfaces (APIs) for use by applications executing at device 18.

Virtual machine software 44 is software that enables wireless communication device 18 to present a user interface for server-side applications such as application 24 (FIG. 1). The virtual machine software 44 may be downloaded over wireless network 30 to the device 18 from transaction server 14, where it may be stored as machine-executable code on a machine-readable medium such as a hard disk drive or a removable optical disk 42 (FIG. 1) for example. The operation of virtual machine software 44 is governed by the application definition file 58. The software 44 is described below in greater detail.

Database management system (DBMS) 48 is a conventional DBMS which facilitates storage of data to and manipulation of data from database 60 which is resident in secondary storage 46 of device 18. DBMS 24 may be a commercially available database management system, such as Sybase^{™}, Microsoft® Pocket Access, Microsoft® SQLCE, Oracle, or J2ME MIDP storage, for example, capable of execution at a wireless communication device. DBMS 24 is capable of executing queries, such as structured query language (SQL)-type queries, for extracting desired data from the database 60. DBMS 24 provides an Application Programming Interface (API) for query execution.

User interface 38 provides a mechanism for entering data at wireless communication device 18 and for viewing a displayed graphical user interface. The interface 38 typically includes a keypad and a display such as a touch-screen.

Secondary storage 46 is non-volatile memory, such as flash memory for example, which stores an application definition file 58, and a database 60, described below.

Application definition file 58 is an application-specific markup language document which governs the operation of the wireless communication device 18. In the present embodiment, the application definition file 58 is an Extensible Markup Language (XML) document. The XML may for example be formed in accordance with the Extensible Markup Language (XML) 1.0 (Third Edition) W3C Recommendation dated 04 February 2004, which is provided at www.w3.org/TR/2004/REC-xml-20040204/. The XML document contains markup language elements (i.e. XML elements) including at least one XML element describing a refreshable database query. Based on the XML elements (including any attributes thereof) contained in the application definition file 58, the virtual machine software 44 instantiates corresponding objects at run time to present data from the server-side application 24 and to accept user input for transmission back to the application 24 at application server 12, as will be described.

Database 60 comprises one or more electronic files storing data related to application 24 for access by the virtual machine software 44 via DBMS 48. In the present embodiment, the data is stored in at least one table within the database 60 containing records (rows) with user-defined fields (columns). The database 60 may for example be a relational database, but this is not required.

The structure of wireless communication device 20 is similar to that of wireless communication device 18, with the exception of its operating system and certain physical characteristics.

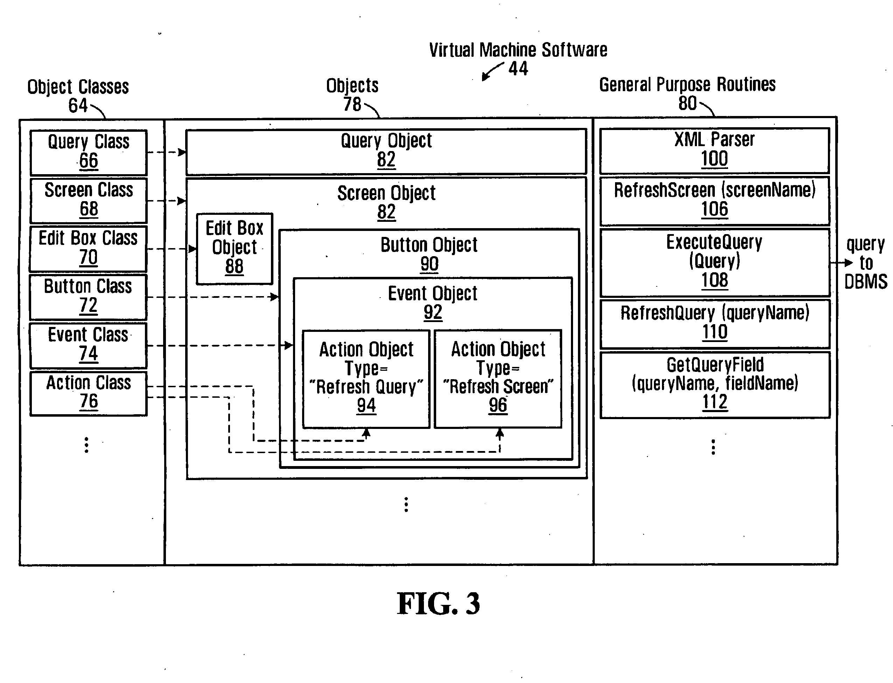

FIG. 3 illustrates the virtual machine software 44 of FIG. 2 at run time. As illustrated in FIG. 3, virtual machine software 44 includes object classes 64, objects 78, and general purpose routines 80.

Object classes 64 are precompiled classes (object code) authored in an object-oriented language such as Java or C++. Each class corresponds to an XML element that may be defined within the application definition file 58. A description of some of the XML elements which may appear within the file 58 is provided in the AIRIX^{™} markup language (ARML) specification of Appendix "A" attached hereto; other XML elements are described, namely new refreshable database query elements which may be defined at a global mobile application level, as well as a new type for the ACTION element which permits global queries to be refreshed, and are described in the remainder of the description. A person of ordinary skill will readily appreciate that these cumulative XML entities are exemplary only, and may be extended, or shortened as desired. At run time, the virtual machine software 44 instantiates one or more instances of at least some of object classes 64 in memory 36 of wireless communication device 18 (FIG. 2) based on XML elements appearing within application definition file 58 and their attributes (the objects 78 of FIG. 3 are examples of such instances). Each object class 64 defines methods which capture certain behaviours that are performed by all instances of the class (e.g. a button class may include a highlight() method which, if invoked for any instance of the button class, executes the same code to cause the relevant button to become highlighted), as well as data members which are set upon instantiation of a class instance in order to "customize" the characteristics or behavior of the instance (e.g. the button class may also include X and Y coordinate data members which are set to unique values for each button class instance to define a unique location for the represented button on an encompassing GUI screen). In FIG. 3, object classes 64 include a database query class 66, a screen class 68, an edit box class 70, a button class 72, an event class 74 and an action class 76. These classes are described below in the context of operation of system 10 of FIG. 1. Other classes (not illustrated) may be included within classes 64. The classes 64 may be loaded from machine-readable medium 42 (FIG.1) along with the rest of the virtual machine software 44.

Objects 78 are instances of object classes 64 that are created dynamically when the virtual machine software 44 is executed. The instantiation of objects 78 from classes 64 is indicated by dashed lines in FIG. 3. Each of objects 78 corresponds to an XML element defined within the application definition file 58. A more detailed description of the exemplary set of objects 78 of FIG. 3 is provided below in conjunction with the description of operation of the present embodiment.

General purpose routines 80 constitute a managing environment for the objects 78. The routines 80 encompass functionality which is useful for presenting a mobile application at the wireless communication device 18 but does not logically form part of a particular type of object 78. The routines 80 effectively consolidate certain functionality for convenient invocation from any of objects 78, as required. As shown in FIG. 3, the routines 80 include an XML parser routine 100, a RefreshScreen routine 106, an ExecuteQuery routine 108, a RefreshQuery routine 110, and a GetQueryField routine 112. These routines are described below in conjunction with the description of operation of the present embodiment.

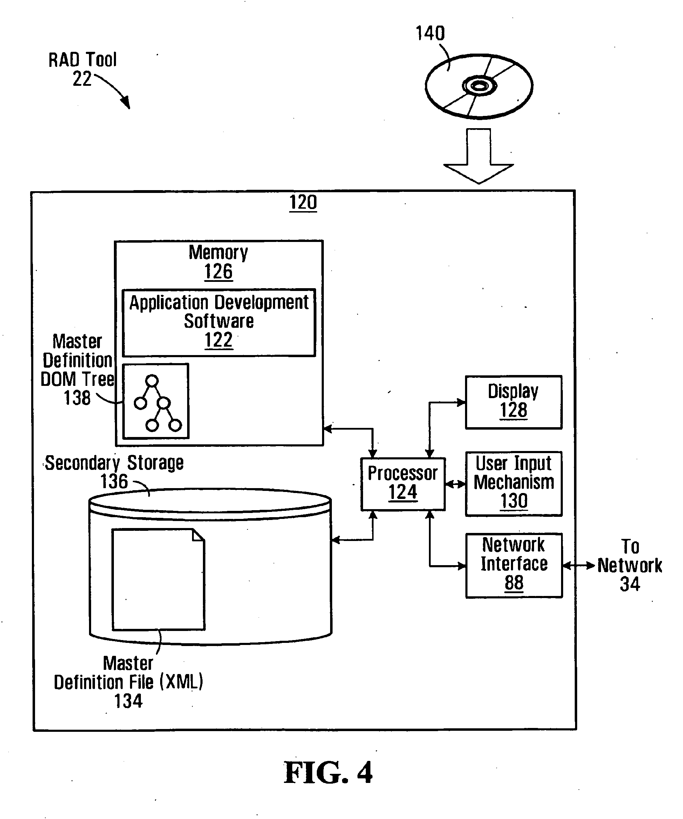

FIG. 4 schematically illustrates the RAD tool 22 of FIG. 1 in greater detail. In the present embodiment, the RAD tool 22 is a PC 120 executing application development software 122. The PC 120 includes a processor 124 in communication with memory 126 which stores software 122. The PC 120 further includes a conventional display 128, such as a Cathode Ray Tube (CRT) monitor or flat-screen display for example, and a conventional user input mechanism (UIM) 130, such as a keyboard and/or a mouse for example. The PC 120 further includes a network interface card 132 (e.g. an Ethernet interface) which facilitates communication by the tool 22 over network 34, e.g. for purposes of uploading a master definition file 134 to the transaction server 14.

The application development software 122 provides a graphical user interface which facilitates "drag and drop" development of mobile applications. As a user develops a mobile application using UIM 130, the RAD tool 22 automatically generates a dynamically-accessible representation of the corresponding hierarchy of XML elements (e.g. in accordance with Appendix "A" within memory 126 and the below description) in the form of a master definition DOM tree 138 data structure. A DOM tree is essentially a dynamically-accessible representation of an XML document that is well understood in the art (DOM trees are described at www.w3.org/DOM/). The RAD software 122 may be implemented as a set of plug-ins to a generic integrated design environment (IDE) framework such as the Eclipse framework. As is known in the art, the Eclipse platform is designed for building integrated development environments that can be used to create various applications such as web sites, embedded Java^{™} programs, C++ programs, and Enterprise JavaBearis™ for example. The platform exposes mechanisms to use and rules to follow to tool providers via well-defined APIs, classes and methods. Application development software 122 may be written in Delphi, using an SQL Server database for example, and may be loaded into PC 120 from a machine-readable medium, such as an optical disk 140.

The master definition file 134 in secondary storage 136 is a serialized representation of the master definition DOM tree 138. The master definition file 134 is created by the application development software 122 when the user indicates that development of the mobile application is complete. The file 134 is stored in secondary storage 136 pending its transmission to the transaction server 14, where it is used to create an application definition file 58 that is downloaded to the wireless communication device 18.

In operation, a developer uses the RAD tool 22 (FIG. 4) to develop a mobile application for the wireless communication device 18. To develop a mobile application, the developer: designs one or more graphical user interface screens along with the screen-to-screen control flow for the mobile application; specifies a format of data (e.g. XML packages) to be exchanged with the server-side application 24 via wireless network 30 (FIG. 1); and specifies a format of data (e.g. a database table) for storing application data in database 60 (FIG. 2).

The procedure for developing a mobile application consists of creating a visual hierarchy or "tree" of icons which correlates to a logical hierarchy of XML elements (e.g. as defined in Appendix "A" and as further defined below) using application development software 22. Each icon represents a building block of the application (e.g. a GUI screen, a database table, a database query, etc.) and corresponds to a defined XML element having (in most cases) associated attributes. As a user creates icons and assigns properties to them, the RAD tool 22 automatically generates a dynamically-accessible representation of the corresponding hierarchy of XML elements and attributes within memory 126 within the master definition DOM tree 138 data structure. When the user of tool 22 has completed development of the mobile application, the application is "published", i.e. the master definition DOM tree 138 is serialized to form a master definition file 34.

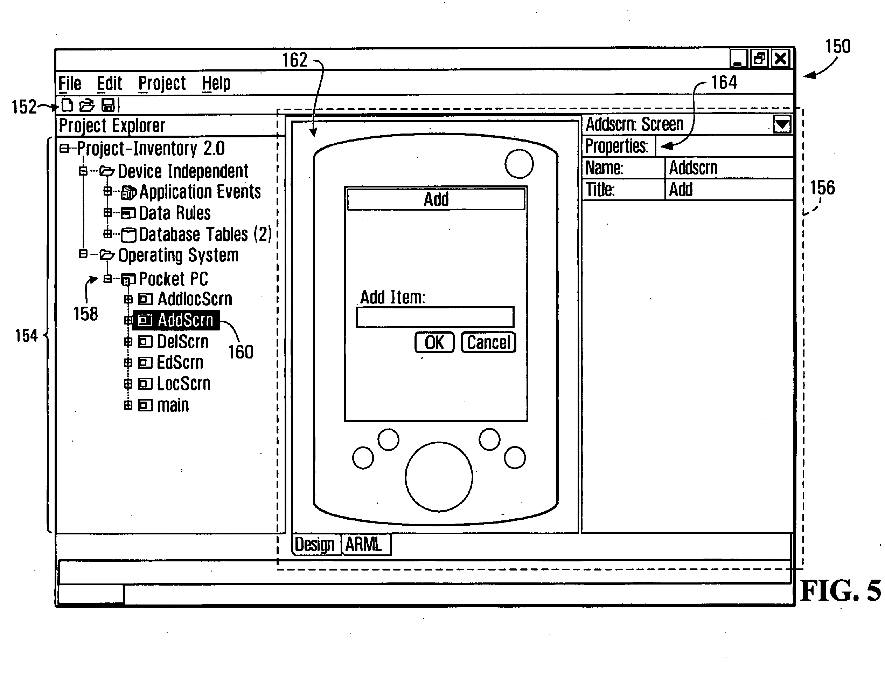

The RAD software 122 presents a GUI 150 as shown in FIG. 5 to facilitate mobile application development. The GUI 150 includes various components, such as a toolbar 152, a project explorer 154, and a main design area 156.

The toolbar 152 provides a menu list and icons for performing various development activities during mobile application development, such as creating or opening a project (which corresponds to a mobile application) or serializing a master definition file DOM tree 138 to create a master definition file 134.

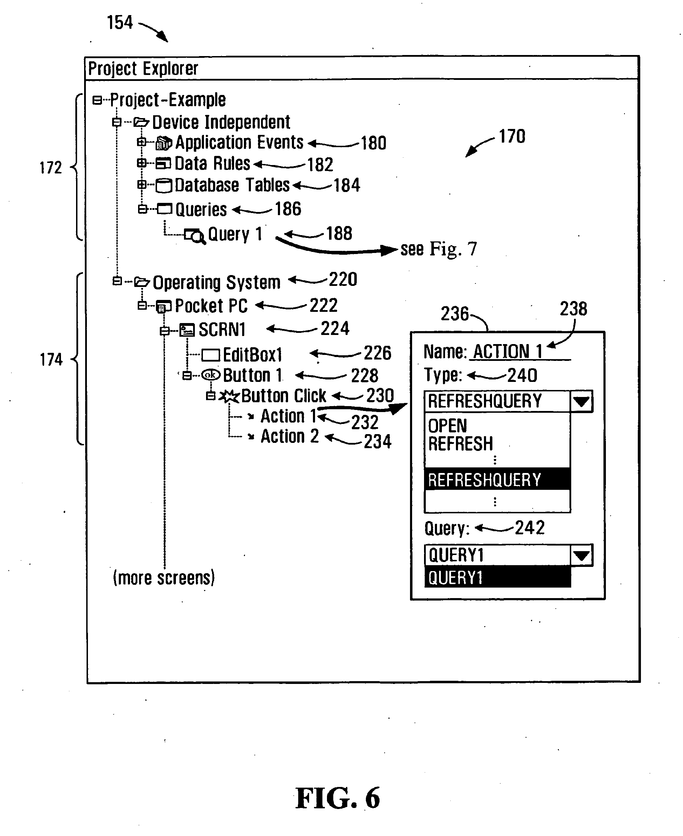

The project explorer 154 contains a visual hierarchy of icons 158 that is created by the developer to represent the mobile application. A detailed view of an exemplary project explorer is provided in FIG. 6.

The main design area 156 is for displaying an application component, such as a GUI screen or GUI screen component, whose icon 162 is currently selected in the project explorer 154. This area may include a screen designer window 162 and a properties window 164. When an icon 160 is selected in the visual hierarchy, a graphical representation of the relevant component a GUI screen in the case of icon 160 is displayed in the screen designer window 162 and its properties are displayed in the properties window 164. The screen designer is a "screen painter" which displays a graphical representation of the relevant wireless communication device type (a "virtual device") for which GUI screens are being created. In FIG. 5, a virtual Pocket PC device is show in the screen designer 162. The screen designer 162 permits a developer to design a GUI screen by dragging and dropping display elements (such as textual components, buttons, edit boxes, or other widgets) to the virtual device screen in the window, offering a "what you see is what you get" (WYSIWYG) view of the GUI screen under development. The properties window 164 displays the properties of a currently selected GUI component and allows them to be modified. The properties of a selected component generally correspond to attributes of an XML element within the master definition file DOM tree 138 corresponding to the selected component.

FIG. 6 illustrates a project explorer 154 containing an exemplary visual hierarchy of icons 170 which incorporates an exemplary database query. In certain respects, the hierarchy is similar in appearance to a graphical directory and file structure representation of a conventional operating system. Hierarchy branches are collapsible. When collapsed, a "+" symbol is displayed; when expanded, a "-" symbol is displayed. The visual hierarchy 170 includes platform-independent components 172 and platform-specific components 174.

Platform-independent components 172 are application building blocks which are present in each platform's version of the mobile application. Put another way, all application definition files which will ultimately represent the mobile application at a wireless computing device will contain components 172, regardless of the platform of the device. Platform-specific components 174, on the other hand, may differ between wireless communication devices of different types, such as devices 18 and 20. Typically, it is the GUI screens of a wireless communication device application which will differ in some measure between wireless communication device types, due to differences in the capabilities of the devices (e.g. screen size and supported display elements).

As shown in FIG. 6, the platform-independent components 172, which comprises the Device Independent branch of the visual hierarchy 170, include application events 180, data rules 182, database tables 184 and database queries 186.

Application events 180 are definitions of occurrences which trigger processing within the mobile application regardless of the application's status (e.g. regardless of which GUI screen is presently displayed). For example, the receipt of an XML package (message) at the wireless communication device 18 or 20 can be defined as an application level event. Beyond application level events, a developer may also define screen level events (arrival of an XML package when a specific GUI screen is displayed) and control level events (user manipulation of a GUI control such as a button press), however these are defined in the platform-specific constructs branch 174. It is noted that at least one action is normally defined in conjunction with each event to define the processing that will occur upon the occurrence of the event.

Data rules 182 dictate how XML packages received from enterprise applications such as application 24 affect data stored in database tables associated with an application. A rule typically defines which field(s) of a table will be impacted by incoming data and the nature of the impact. Because rules make reference to database tables, logically they are defined after the tables (described below) have been defined. Like application-level events 180, data rules 182 are wireless computing device type-independent. Rules also dictate how to apply changes to database tables from XML created in an outgoing XML transaction in the context of an ARML action.

Database tables 184 are defined for the purpose of storing application-related data at run time for use by the mobile application executing at the wireless communication device 18 or 20. The definition of database tables in this section results in the run-time creation of comparable database tables in the database 60 of wireless communication device 18 (FIG. 2).

Database queries section 186 contains definitions of refreshable database queries, which are a focus of the present description. A refreshable database query (or simply "database query") is defined for the purpose of retrieving application data from the database 60 at run time. The retrieved data is stored by the query and may be accessed by other application components, such as user interface components (e.g. in order to populate a GUI screen) or actions which cause XML packages to be constructed (e.g. in order to populate fields within the XML packages). The query is a "snapshot" of data from the database 60. A query defined in section 186 is considered to be global, in the sense that any application component, whether defined in the platform-independent branch 172 of the visual hierarchy 170 or defined in the context of a particular platform within the platform-specific constructs branch 174, may access its stored results. This may relieve a developer using RAD tool 22 from the burden of implementing the same database query for each platform represented in each platform-specific constructs branch 174, as may be required if database queries were not global. Database queries defined in section 186 are not automatically refreshed e.g. when a screen referencing the query is redisplayed, but rather are capable of being instructed to refresh themselves by other application components (including application components within either of platform-independent components branch 172, the platform-specific components branch 174) in response to application-level, a screen-level or control-level events. This control over the frequency and circumstances of database query refreshing gives the developer the power to refresh queries only when necessary, which may avoid unnecessary refreshing. Generally, the use of database queries facilitates development of complex mobile applications, because queries permit application data to be accessed and possibly combined with other extracted data in numerous ways.

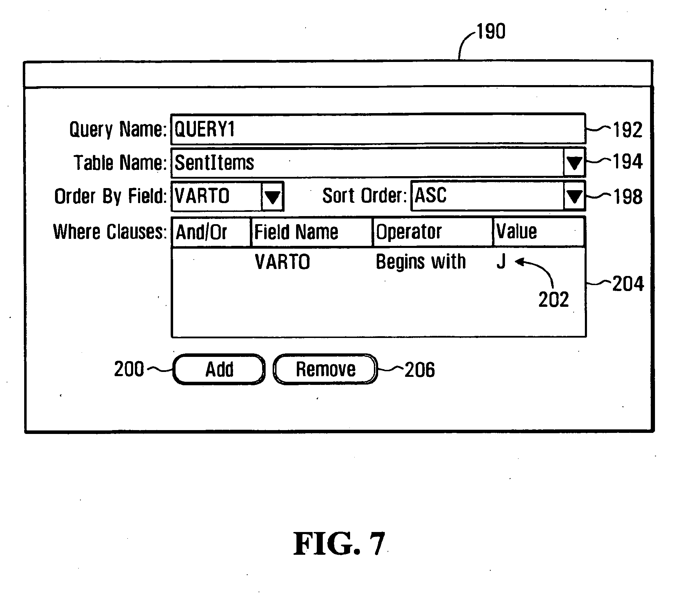

The procedure for defining a database query in the database queries branch 186 may be as follows. The icon corresponding to the database queries section 186 may initially be selected with a mouse (or similar user input mechanism 130) of the RAD tool 22 (FIG. 4). A right-click (or similar user action) may cause a pop-up menu to be displayed. The pop-up menu may present a list of options in the context of the selected database queries section 186. An Add Query option may permit the user to define a new database query. Selection of that menu options may cause a new database query icon 188 to be created below icon 186, as shown in FIG. 6, and a Query Properties window 190, as shown in FIG. 7, to be displayed in the main design area 156 (Fig. 5).

Referring to FIG. 7, the Query Properties window 190 permits the user to enter properties of the newly defined database query. The Query Properties window includes a Query Name field 192 for entering a unique query name that is not already in use by any other query. The name uniqueness constraint ensures that each database query may be uniquely referenced from other areas of the visual hierarchy 170. In the present example, it is assumed that the name "Query1" has been entered. That name is displayed as part of the icon art 188 (FIG. 6). A Table Name field 194 (FIG. 7) allows the developer to select the name of the database table against which the query is to be performed. The field 194 is a drop-down list enumerating the database tables defined under the database tables section 184 of FIG. 6. In the example, a table "SENTITEMS" has been selected from that list. The Order By field 196 specifies that the query results (i.e. the records from table "SENTITEMS" which match the query's search criteria) should be automatically sorted by a field in the "SENTITEMS" table named "VARTO". The drop-down list 196 is automatically populated with the fields defined in the table selected in field 194, i.e. the "SENTITEMS" table. Field 196 can be left blank if the query is designed to return a single record or if the results do not require sorting. When the Order By field 196 has been specified the Sort Order field 198 can be set to either ASC (ascending) or DESC (descending) to control the ordering of query results.

Selection of the Add button 200 of FIG. 7 permits a "where clause" to be defined. As is known in the art, a where clause specifies the search parameters for a database query. An exemplary where clause 202 is illustrated in FIG. 7. The where clause 202 specifies a Field Name, an Operator and a Value. The Field Name indicates which field of the table specified in field 194 is to be examined. The Operator indicates the nature of the operation to be performed (Equals, Not Equal To, Less Than, Greater Than, or in the case of string fields, Begins With) in respect of that field, which is generally a comparison of the field value against another value. The Value is the value against which the named field is to be compared. Thus, the where clause 202 of Fig. 7 causes records to be returned in which the "VARTO" field begins with the letter "J". To define additional where clauses, the Add button 200 may be selected again. A new query, which would appear as another entry row below clause 202 in the Where Clauses field 204 may be similarly defined. For each where clause defined in addition to the first, the AND/OR field is also specified to indicate whether the overall set of where clauses is conjunctive or disjunctive. A where clause may be removed using the Remove button 206. The user can also specify a temporary, named, "scratchpad" value stored at the device to effect a dynamic comparison.

Referring back to FIG. 6, the "Operating Systems" branch 220 comprises the platform-specific components section 174 of visual hierarchy 170. This branch permits the definition of platform-specific aspects of a mobile application, which primarily comprise the displayable GUI screens and control flow of a mobile application. In FIG. 6, only one exemplary GUI screen definition 244 is illustrated. This screen appears within the "Pocket PC" branch 222, indicating the screen is a Pocket PC screen. Other GUI screen definitions are omitted for brevity.

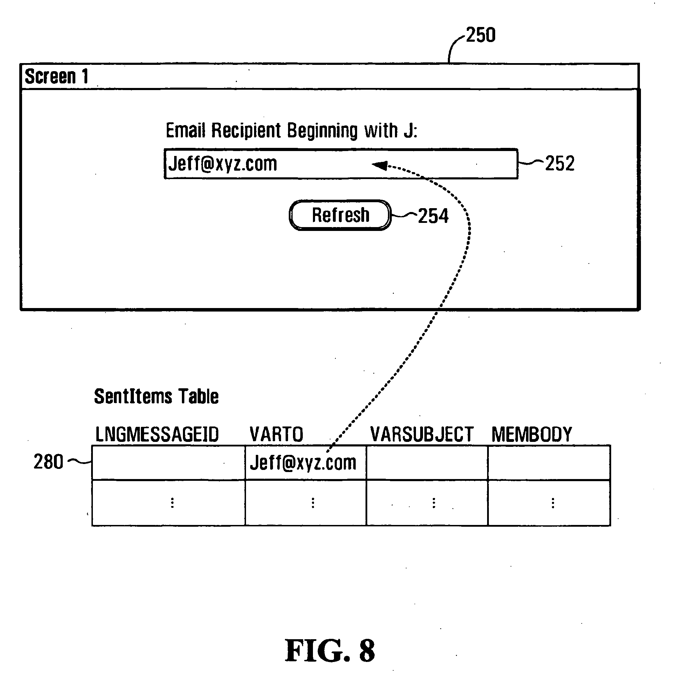

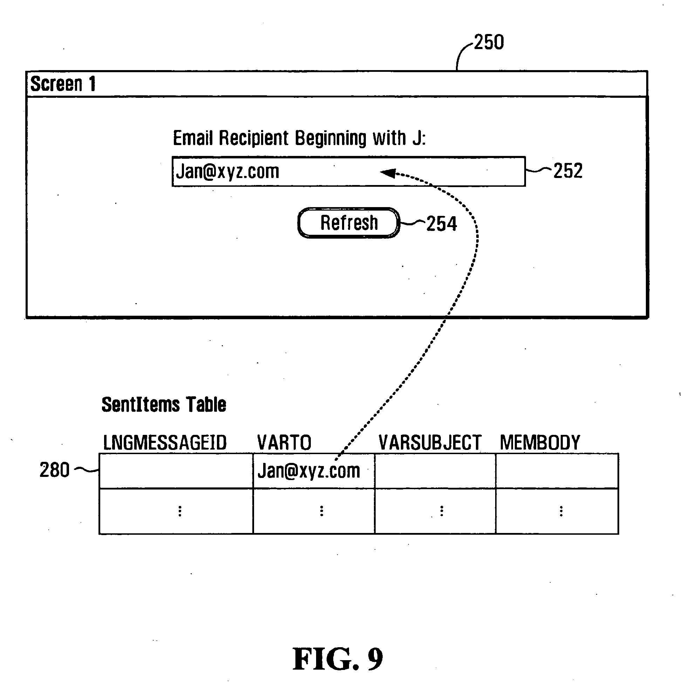

Screen definition 224 defines the GUI screen 250 of FIGS. 8 and 9. Referring to FIG. 8, it can be seen that GUI screen 250 has an edit box 252 and a "REFRESH" button 254. In the present embodiment, it is desired that the edit box 252 (a form of display element) be populated with the value of a field entitled "VARTO" of the database table 280 "SENTITEMS", also shown in FIG. 8, when the screen 250 is displayed. More specifically, the value should be taken from the first row of table 280 (which represents a single email message from the "SENTITEMS" table) in which the value of the "VARTO" field (which represents a destination email address value) begins with the letter "J". Moreover, upon user selection of the "REFRESH" button 254, it is desired for the screen to be redrawn, with the email address in edit box 252 being refreshed. If the value of the "VARTO" field in the first row of the "SENTITEMS" table in which the "VARTO" field value begins with the letter "J" has changed since the last time the query was executed, the changed value should be reflected within edit box 252, as shown in FIG. 9, in which the screen has been redrawn.

Referring back to FIG. 6, below screen definition 224 within the hierarchy 170, two icons 226 and 228 are created. The first icon 226 represents the edit box 252 of FIG. 8. The second icon 228 represents the "REFRESH" button 254 of FIG. 8. Each of these application components may be created by right-clicking the icon 224, choosing the appropriate new display element (from a pop-up menu or a toolbar for example), and defining the new element's properties in properties window 164 (FIG. 5).

A ButtonClick event 230 is defined below the button icon 228. This event represents the selection of the "REFRESH" button 254 of FIG. 8 by a user of wireless communication device 18. Right-clicking of the event icon 230 in project explorer 154 causes another pop-up menu to be displayed. The options that are presented on the displayed pop-up menu include an Add Action option. This option is used to add two actions icons 232 and 234.

The first icon 232 ("Action 1") represents a refresh query action which causes a specified database query, namely database query 188 ("Query 1"), to be to be refreshed at run time. The definition of properties for this action in the properties window 164 is illustrated in inset 236 of FIG. 6. A name field 238 allows the developer to enter a name ("Action 1") that will be displayed in the project explorer 154 as part of the icon 232. A "Type" field 240 provides a drop-down list which lists each type of action that may be performed by a Pocket PC wireless communication device. In FIG. 6, the list is illustrated in a dropped-down state, with one entry, namely "REFRESHQUERY", being selected (as indicated by reverse video), to indicate that the action 232 is a "refresh query" action. Selection of the "REFRESHQUERY" action type results in the further display of a "Query" field 242 in properties window 164. The "Query" field 242 also provides a drop-down list, in this case listing by unique name each global database query which has been defined under the Queries branch 186 of FIG. 6. The drop-down list of Fig. 7 is illustrated in a dropped-down state, with only one entry, namely "Query1", corresponding to the sole query 188 defined present embodiment, being selected.

The second action icon 234 ("Action2") represents a "REFRESH" action that causes the GUI screen 250 of FIG. 8 to be refreshed at run time. The "REFRESH" action is described in Appendix "A" (section 6.3.10).

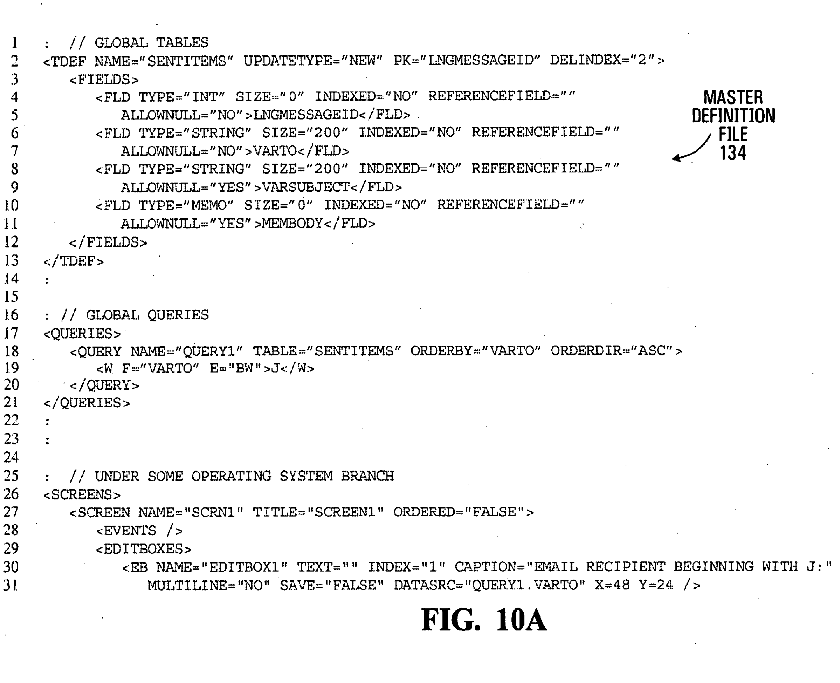

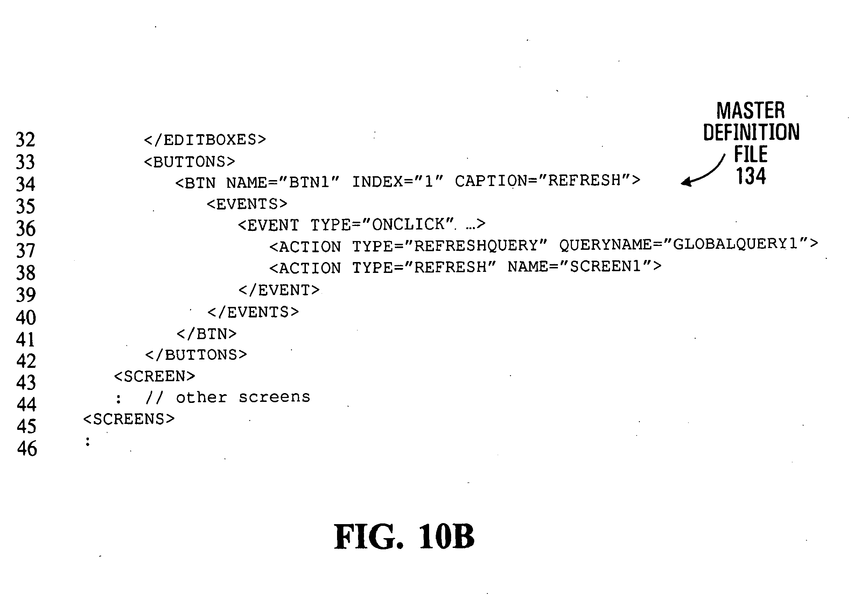

When development of the mobile application using RAD 22 tool is complete, the developer may select a "Save" button, or similar GUI construct, of the application development software 122. When this is done, the application definition DOM tree 138 of FIG. 6 is serialized to form a textual XML markup language document, i.e. master definition file 134, as shown in FIGS. 10A and 10B. This document 134 is stored in the secondary storage 136 of RAD tool 22 (Fig. 4).

The master definition file 134 of FIGS. 10A and 10B contains XML elements representing all of the application constructs defined within the project explorer 154 of FIG. 6. Some XML elements are omitted from FIG. 10A and 10B for brevity (as indicated by colons). Most of the defined XML entities are detailed in Appendix "A", attached hereto. The defined XML entities are interpreted by the virtual machine software 44, and serve as building blocks for software which presents server-side applications at mobile device 18.

It will be appreciated that lines with the prefix "//", such as lines 1, 16 and 25 of FIG. 10A, are comments that are intended to facilitate comprehension of FIGS. 10A and 10B. They are not valid markup language elements and are not actually present in the generated document 134.

Lines 2-13 of FIG. 10A contain a TDEF markup language element and subordinate FIELDS and FLD elements which cumulatively define the "SENTITEMS" database table 280 of FIG. 8. The FLD elements at lines 4-11 cumulatively specify that a single row in the table (which represents a single sent email message) has four fields, namely, an integer field "LGMESSAGEID" (for storing an email message ID), a string field "VARTO" (for storing a destination email address), a string field "VARSUBJECT" (for storing an email subject line) and a memo field "MEMBODY" (for storing an email message body). The XML element and attribute names at lines 2-13 are as described in the table definitions section 3.2 of Appendix "A".

Lines 18-20 of FIG. 10A contain a QUERY element and subordinate W element which correspond to query 188 of FIG. 6. The values of the NAME, TABLE, ORDERBY and ORDERDIR attributes at line 18 are taken from the Query Name field 192, Table Name field 194, Order By field 196 and Sort Order field 198 of FIG. 7, respectively, as set by the developer. The W element at line 19 represents where clause 202 of FIG. 7.

Lines 27-43 of FIGS. 10A-10B contain a SCREEN element and various subordinate XML elements which cumulatively define the screen 250 of FIG. 8 or 9. Notably, the EB element at lines 30-31 of FIG. 10A includes a DATASRC attribute which specifies that the edit box is to be populated with the value of the VARTO field of the query "QUERY1", declared at lines 18-20, when the edit box is initially displayed. If the query returns multiple records, the value of the VARTO field of the first record is used (other display elements, such as list boxes or grids, may be capable of displaying the value of the VARTO field for each returned record). Also, the ACTION element at line 37 (FIG. 10B) represents a refreshing of the database query defined at lines 18-20 of FIG. 10A and corresponds to the REFRESHQUERY action 232 defined in FIG. 6.

The master definition file 134 of FIGS. 10A-10B is uploaded to transaction server 14 via network 34 (FIG. 1), using conventional mechanisms, and stored in secondary storage of transaction server 14, until it is needed by a wireless communication device 18. At that stage an application definition file 58 is created for the requesting device 18, as described in U.S. Patent Publication No. 2003/0060896, and the file 58 is transmitted to the device 18. Advantageously, the application definition file 58 is relatively small in size compared to a typical software application. This may limit the amount of data transmission necessary between the transaction server 14 and device 18.

Upon receipt of the application definition file 58, the XML parser 100 (FIG. 3) at wireless communication device 18 parses the XML text of application definition file 58. XML Parser 100 converts the XML document 58 into a DOM tree representation. The DOM tree is used to facilitate the instantiation of objects 78 (FIG. 3) from classes 64 and the population of their data members with elements and attribute values from the document 58 (as described below). For each XML element that is encountered during the traversal, a corresponding object 78 (FIG. 3) may be instantiated from one of object classes 64. Instantiation of each object 78 may be facilitated by a fromXML() "constructor" method within the corresponding class 64, which populates the object's data members based on XML element/attribute values. For example, the constructor method may receive the XML fragment which defines the XML element in the application definition file 58 and, based on element and attribute values within the fragment, automatically populate the newly-instantiated object's data members with like values. It is noted that the constructor method may or may not meet the strict definition the term "constructor" as it is understood in the context of certain object-oriented programming languages (e.g. the method may not have the same name as the class). Once the objects 78 have been instantiated and so populated, the DOM tree may be deallocated.

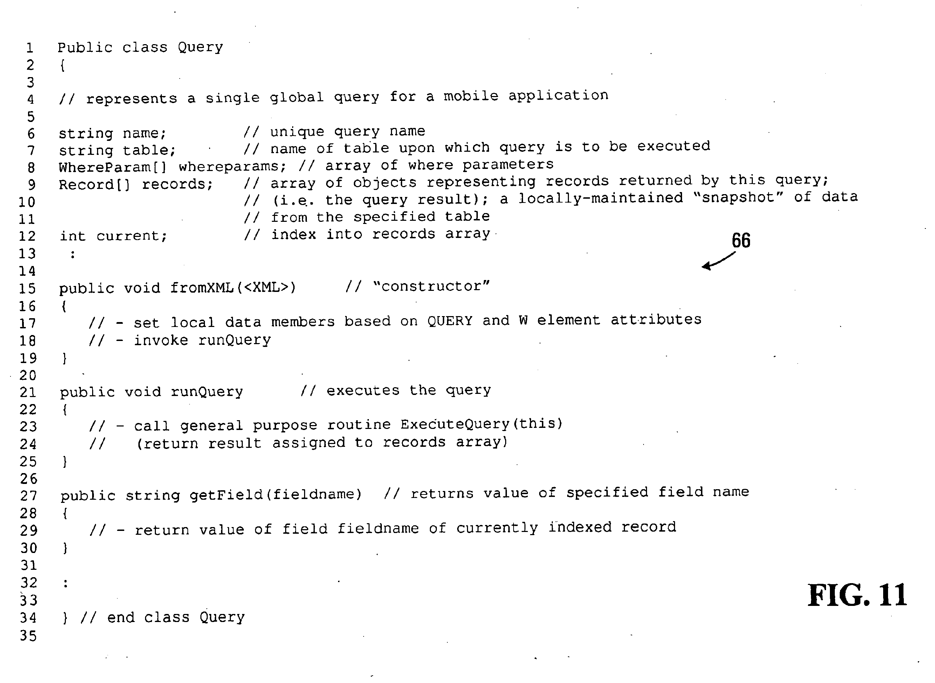

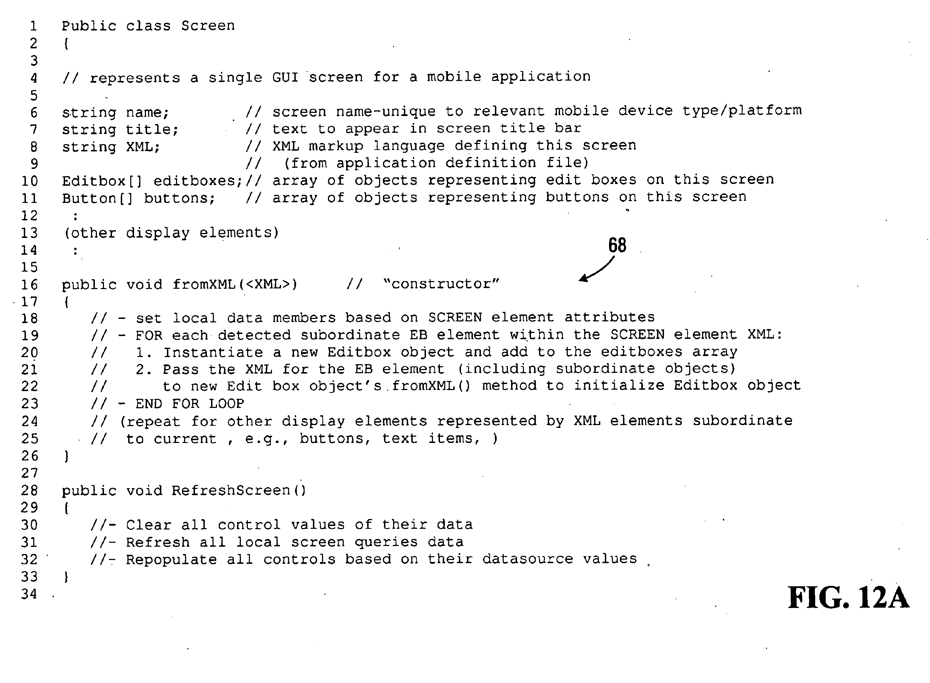

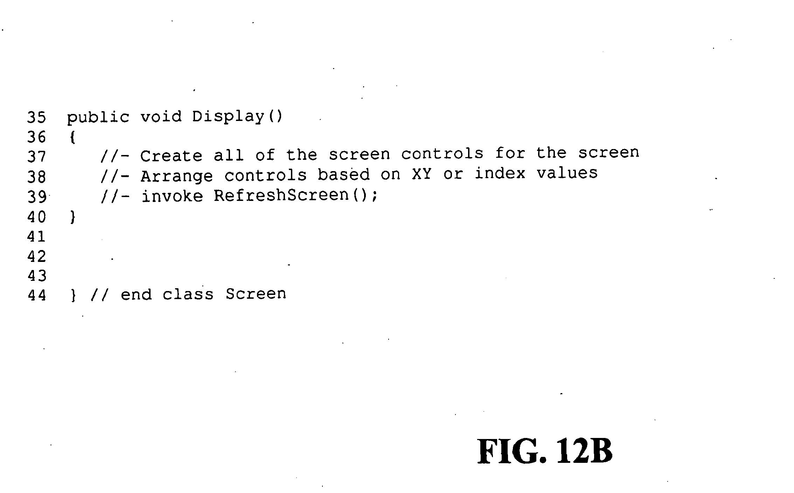

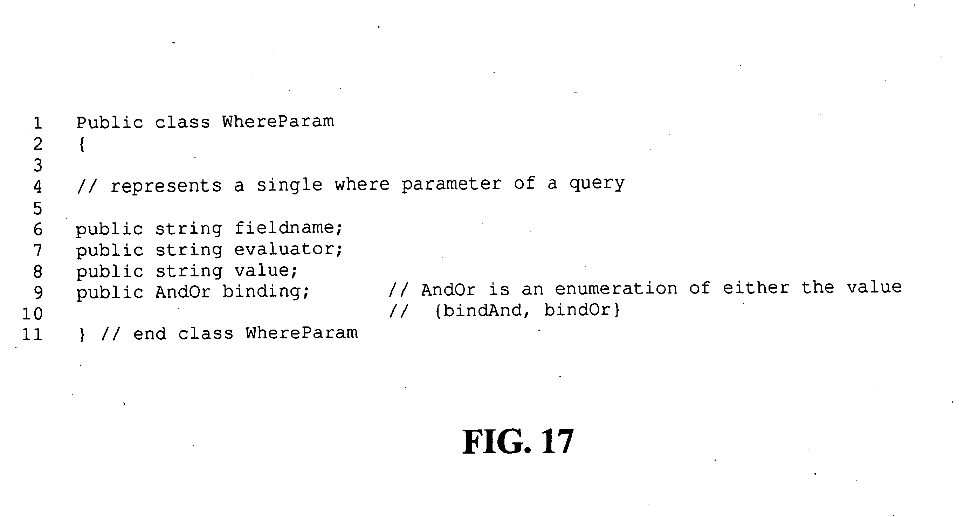

With reference to FIG. 10A, parsing of the QUERY element at lines 18-20 accordingly results in the instantiation of the query object 82 (FIG. 3) from Query class 66 which is illustrated in pseudocode form in FIG. 11, and in the invocation of its fromXML() method, shown at FIG. 11, lines 15-18. In FIG. 11, text following a "//" delimiter denotes a comment (this is also true in FIGS. 12-14 and 15A-15B). The fromXML() method causes local data members "name" and "table" (lines 6-7 of FIG. 11) to be set to the attribute values of the same name from the QUERY element XML that is passed as an input parameter. The "whereparams" data member (line 8) is populated by parsing the subordinate W element(s) and populating a WhereParam object for each W element. The WhereParams class is illustrates in FIG. 17. Thereafter, the runQuery() method (lines 20-24 of FIG. 11) is invoked to cause the query to be executed. The query is executed at this stage so that a snapshot of desired table data will be available during instantiation of GUI screen objects, whose textual aspects may be initialized based on the retrieved table data. The runQuery() method in turn invokes the general purpose routine executeQuery 108. Matching records are returned in the "records" parameter.

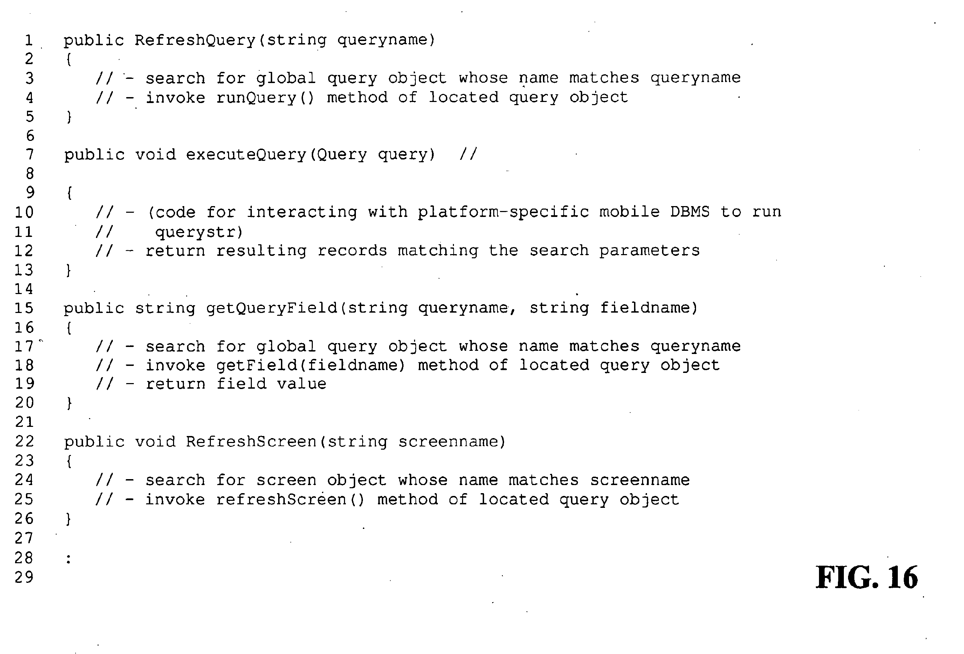

The executeQuery method 108 is illustrated at lines 7-13 of FIG. 16, which illustrates various general purpose routines 80 (Fig. 3). The executeQuery method accepts a query object as a parameter. Instructions within the method cause the query to be performed. The supplied query string is passed to the DBMS 48 (FIG. 2) at the mobile device 18. The instructions may interact with an Application Programming Interface (API) of DBMS 48 (e.g. may invoke API functions, routines, procedures or methods). The instructions may be DBMS-specific and will be known to those skilled in the art. An exemplary set of instructions is described at www.w3schools.com/ ado/ado_reference_connection.asp. The records array data member of the query object is populated with database records matching the search parameters. It will be appreciated that the body of method 108 could alternatively be included within the runQuery method of the query object 82.

XML elements that are nested within application definition file 58 may result in the instantiation of corresponding objects 78 in a "cascade" fashion. For example, parsing of the SCREEN element at lines 27-43 of FIGS. 10A-10B results in the instantiation of the screen object 82 (FIG. 3) from Screen class 68, illustrated in pseudocode form in FIGS. 12A and 12B, and in the invocation of its fromXML() method, shown at FIG. 12, lines 16-26. The fromXML() method initially causes local data members "name" and "title" (lines 6-7 of FIG. 12A) to be set to the attribute values of the same name from the SCREEN element XML that is passed as an input parameter.

Thereafter, for each EB (edit box) element subordinate to the SCREEN element, the fromXML() method: (1) instantiates a new Editbox object from Editbox class 70 and adds it to its editboxes array (declared at lines 10 of FIG. 12A), and (2) passes the XML for the EB element to the fromXML() method of the newly declared Edit Box object.

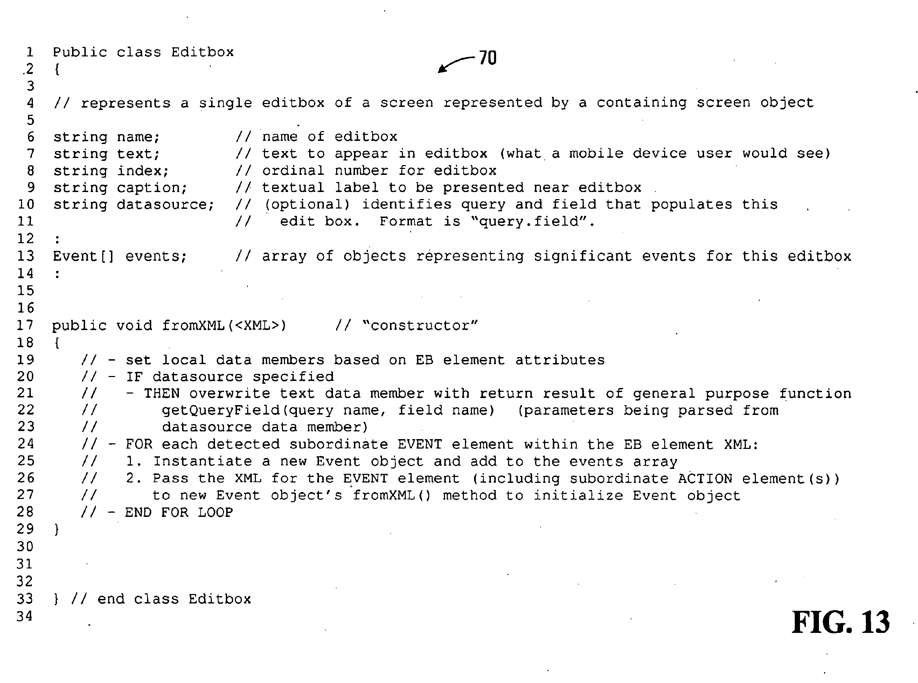

In the illustrated example, only one EB element is declared in the application definition file 58 (corresponding to lines 30-31 of the master definition file 134 of FIG. 10A), therefore only one editbox object 88 is instantiated from class 70 (FIG. 3). The Editbox class 70 is illustrated in pseudocode form in FIG. 13. The fromXML() method (lines 17-29 of FIG. 13), which is invoked immediately following instantiation of the editbox object 88, causes local data members (in this case "name", "text", "index", "caption" and "datasource" - see lines 6-10 of FIG. 13) to be set to the attribute values of the same names from the XML that is passed as an input parameter. When the datasource attribute is specified to a non-null value, as it is in the exemplary application definition (see line 31 of FIG. 10A), the value of the "text" element, which is the text that the wireless communication device user sees within the edit box upon initial display of the screen 250, is overwritten with the value of the specified field of the specified query. A general purpose routine getQueryField 112 is invoked (see lines 20-23 of FIG. 13) to obtain the desired text. The queryname and fieldname parameters are obtained by parsing them from the datasource data member.

The getQueryField routine, which is illustrated in pseudocode form at lines 15-20 of FIG. 16, searches for a global query object within objects 78 (FIG. 3) whose name matches the specified "queryname" input parameter and then invokes the getField method of that object. The latter method, which is illustrated at lines 27-30 of FIG. 11, returns the value of field fieldname of the query's currently indexed record. The index, current (FIG. 11, line 12), is initialized to index the first returned record when query results are returned. In this example, the value of the "VARTO" field of the "QUERY1" query is returned, which, based on the QUERY XML element at lines 18-20 of FIG. 10A, will be a string beginning with "J".

When the instantiation of the edit box object 88 (FIG. 3) is complete, a similar approach is taken to instantiate other display elements comprising the GUI screen 250 (FIG. 8). Referring back to the fromXML() method at lines 24-25, FIG. 12A, for each additional subordinate display element of the encompassing GUI screen: (1) the relevant subordinate object 78 is instantiated from the appropriate one of object classes 64 (FIG. 3) and added to an appropriate array within the data members of the screen object (FIG. 12A, line 13); and (2) the XML for the subordinate element is passed to the fromXML() method of the newly declared subordinate object so that the object may populate its data members and instantiate any further subordinate objects appropriately.

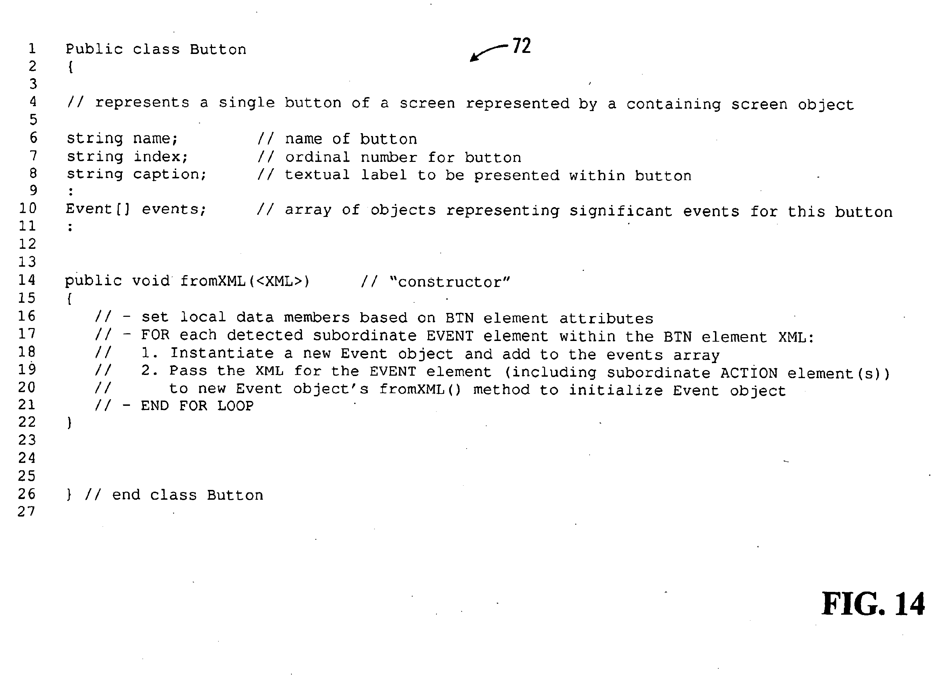

As GUI screen 250 is relatively simple, the only other display element for which the above steps are taken is the button 254 (FIG. 8). Button object 90 (FIG. 3) is instantiated from Button class 72, which is illustrated in pseudocode form in FIG. 14, and its fromXML() method (lines 14-22 of FIG. 14) is invoked. This method causes local data members (in this case, "name", "index" and "caption") to be set to the attribute values of the same names from the XML that is passed as an input parameter (i.e. lines 34-41 of FIG. 10B).

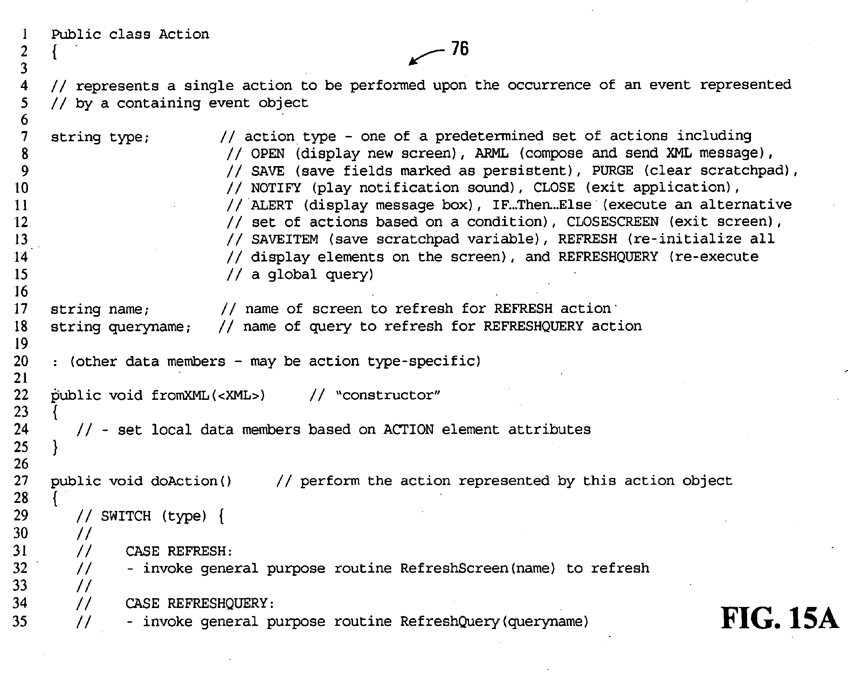

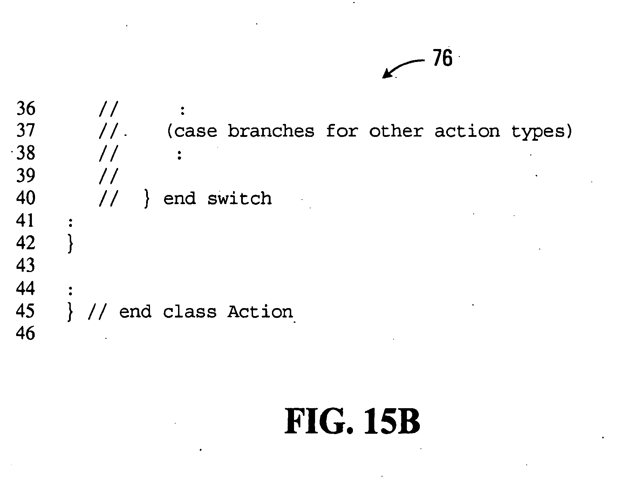

Pseudocode at lines 17-21 of FIG. 14 causes the subordinate event object 92 (FIG. 3), which is declared at lines 36-39 of FIG. 10B (details omitted for brevity) and is representative of a run-time selection of the button 254 of FIG. 8, to be instantiated. In turn, the event object instantiates two subordinate action objects 94 and 96 (FIG. 3) from Action class 76, which is illustrated in pseudocode form in FIG. 15A-15B, based on the ACTION elements at lines 36 and 37 of FIG. 10B, and invokes the fromXML() method of each object. The latter method simply sets the type data member to the value of the type attribute. In the case of object 94, the type is set to "REFRESHQUERY" and the queryname data member is set to "QUERY1". In the case of object 96, the type is set to "REFRESH" (i.e. screen refresh) and the name data member is set to "SCREEN1" (indicating screen 250).

Once the above-described cascade of invocations of fromXML() methods through the various instances of object classes 64 has successfully completed, the result is a hierarchical set of objects 82, 88, 90, 92, 94 and 96 as shown in FIG. 3. For certainty, illustration of an object within the border of another object in FIG. 3 connotes the latter object's containment of the former. Assuming that the first record in the "SENTITEMS" table 280 in which the VARTO field begins with "J" contains the value "Jeff@XYZ.com", the appearance of the screen 250 when it is first displayed will be as shown in FIG. 8.

Subsequent to the initial display of the screen 250 at wireless communication device 18, operation of system 10 (FIG. 1) causes the SENTITEMS table 280 to be updated in memory at the device 18 such that the first record in the "SENTITEMS" table 280 in which the VARTO field begins with "J" now contains the value "Jan@XYZ.com", as shown in FIG. 9, even white screen 250 continues to display "Jeff@XYZ.com". To refresh the screen, the REFRESH button 254 may be selected by the wireless communication device user. Selection of the button 254 triggers, by way of operating system callback, the invocation of a method, which may be named "onEvent()" for example (not expressly illustrated), of the button object 90. The role of the onEvent() method is to execute a method, which may be named doAction() for example, for each of its subordinate action objects in sequence to effect the actions associated with the event.

In the present example, the doAction() method of the first subordinate action object 94 is invoked first. This method is illustrated in pseudocode form at lines 27-42 of FIGS. 15A-15B. The purpose of the method is to perform the action represented by the action object. The body of the method contains a large switch statement which causes different instructions to be executed based on the action type data member (declared at FIG. 15A, line 7). In the case of object 94, the type is "REFRESHQUERY", thus the doAction() method invokes the RefreshQuery (queryname) general purpose routine 110 (FIG. 15A, line 35).

The RefreshQuery(queryname) general purpose routine is illustrated in pseudocode form at FIG. 16, lines 1-5. This routine searches within objects 78 for a Query object whose name matches the value of the queryname parameter, then invokes the runQuery() method of that object to cause the query to be (re-)executed. In the present embodiment, it is assumed that execution of the runQuery() method of the matching query object 82 retrieves one or more records from the "SENTITEMS" table 280 (FIG. 9), with the VARTO field value of the first record now being "Jan@XYZ.com". Notably, the developer may elect to refresh the query via a "REFRESHQUERY" action without redisplaying the screen via a "REFRESH" action, e.g. to ensure the currency of data for use in composing an XML package, by only specifying a "REFRESHQUERY" action. In other words, depending upon the XML elements specified by the developer, the runQuery() method may instantiated and executed mutually exclusively to any instantiation and execution of code which causes the user interface screen 250 to be refreshed.

In the present embodiment, the doAction() method of the second subordinate action object 96 is subsequently executed, however, as refreshing of the user interface screen 250 is in fact desired. This invocation in turn causes the RefreshScreen(name) general purpose routine screen 106, as shown in pseudocode at FIG. 16, lines 22-26, to be invoked (see invocation at FIG. 15A, line 32). This routine 106 searches within objects 78 for a screen object whose name matches the value of the screenname parameter, then invokes refreshScreen() method of that object to cause the screen to be refreshed (see FIG. 12A-12B, lines 28-40). In the result, the screen 250 will appear as shown in FIG. 9.

If, in another part of the mobile application, it were desired to display in a user interface screen 250 the results obtained upon the initial performance of the database query 188 without first causing the query to be refreshed (e.g. in order to conserve processing resources in the case where the database 60 is known not to have changed), then this could be done by simply referencing the query "QUERY1" without executing a "REFRESHQUERY" action first. In other words, depending upon the XML elements specified by the developer, the refreshScreen() method may instantiated and executed mutually exclusively to any instantiation and execution of code which causes the database query to be refreshed.

In another example, if an application had drop-down lists of static data populated from a database, then these lists would not have to be refreshed each time when the user refreshes the screen.. On a wireless communication device, accessing persistent data can be time-consuming. By populating static drop-down lists from an application-level query, the screens need not refresh the contents of these dropdown lists upon screen display. As can be seen from the RefreshScreen() method of FIGS. 12A-12B, only screen queries need be refreshed on a refreshscreen call. Global queries need not be refreshed.
As well, if the data source of a GUI control is a global query and it is determined that the query has not been refreshed since the last time the control was populated, logic may be executed that refrains from any re-population of the control due to the absence of any recent query refreshes. This can result in a significant processing savings when displaying screens.

As will be appreciated by those skilled in the art, modifications to the above-described embodiment can be made without departing from the essence of the invention. For example, markup language documents need not be written using XML. Alternative markup languages (e.g. Standard Generalized Markup Language, of which XML is a subset) could be employed. Moreover, the choice of markup language element and attribute names may differ from those described above.

In the above-described embodiment, the exemplary query is a platform-independent query which is referenced from a platform-specific display element, namely, an edit box within a Pocket PC GUI screen which uses the referenced query's results for the purpose of setting its initial textual content. Although not expressly disclosed above, an edit box may be defined using the RAD tool 22 in an analogous GUI screen for another type of wireless communication device (e.g. a RIM wireless communication device). Such an edit box may similarly reference the platform-independent query, so that the query results may similarly be used to set the initial textual content of the edit box for that platform. Thus, references to a single platform-independent query may exist in a number of different platform-specific display elements. This may conveniently relieve a user of RAD tool 22 from having to define the query once for each platform. When a platform-specific application definition file 58 is generated from the master definition file 134 at transaction server 14, however, only the GUI screen definitions for the platform of interest are included in the file 58. Accordingly, any analogous display elements for other platforms referencing the same global query will not appear within the application definition file 58 that is downloaded to the wireless communication device. As a result, the number of instantiated objects referencing a common global query object may typically not exceed one at any given device in the context of the above-described embodiment.

Nevertheless, it will be appreciated that a query may be referenced by more than one display element (or other construct) of a mobile application in alternative embodiments. For example, it is possible that two or more GUI screens in a mobile application for a given platform may have an edit box that references the same query. In this case, the referencing of a commonly defined query object may result in improved efficiency in comparison with an alternative approach in which queries must be defined on a per-screen basis and in which multiple similar or identical query objects are therefore instantiated at run time.

Some embodiments may only support singular (versus compound) where clauses. In such embodiments, QUERY markup language elements may not have subordinate W (where clause) elements. Rather, where clause attributes may be incorporated directly into the QUERY markup language element.

In alternative embodiments, the DBMS may not support structured query language. Another form of query language may be supported instead.

Other modifications will be apparent to those skilled in the art and, therefore, the invention is defined in the claims.

### APPENDIX "A" : ARML Specification

### Contents

| | | |
|---|---|---|
| 1 | Introduction | 33 |
| 1.1 | Purpose of document | 33 |
| 1.2 | Audience | 33 |
| 1.3 | Definitions & Acronyms | 33 |
| 2 | ARML Overview | 33 |
| 2.1 | ARML design considerations | 33 |
| 2.2 | ARML usage | 34 |
| 2.3 | The scratchpad area | 34 |
| 2.4 | System Variables and Functions | 35 |
| 2.4.1 | Variables: | 35 |
| 2.4.2 | Functions: | 35 |
| 2.5 | Single-Field Lookup | 36 |
| 3 | ARML application definition | 36 |
| 3.1 | General | 36 |
| 3.1.1 | Description | 36 |
| 3.1.2 | Structure | 36 |
| 3.1.3 | Tags | 36 |
| 3.2 | Table Definitions Section | 37 |
| 3.2.1 | Description | 37 |
| 3.2.2 | Structure | 38 |
| 3.2.3 | Tags | 38 |
| 3.2.4 | Example | 39 |
| 3.3 | Package Definitions Section | 40 |
| 3.3.1 | Description | 40 |
| 3.3.2 | Structure | 40 |
| 3.3.3 | Tags | 40 |
| 3.3.4 | Example | 42 |
| 3.4 | Device Interface Definitions Section | 42 |
| 3.4.1 | Description | 42 |
| 3.4.2 | Structure | 42 |
| 3.4.3 | Tags | 43 |
| 3.4.4 | Example | 43 |
| 4 | Application-defined packages | 44 |
| 4.1 | General | 44 |
| 4.1.1 | Description | 44 |
| 4.1.2 | Structure | 44 |
| 4.1.3 | Tags | 44 |
| 4.2 | Package information | 45 |
| 4.2.1 | Example | 45 |
| 5 | User interface Definitions | 47 |
| 5.1 | General | 47 |
| 5.1.1 | Description | 47 |
| 5.1.2 | Structure | 47 |
| 5.1.3 | Tags | 48 |
| 5.2 | Queries definition section | 50 |
| 5.2.1 | Description | 50 |
| 5.2.2 | Structure | 50 |
| 5.2.3 | Tags | 50 |
| 5.3 | Menu definition section | 51 |
| 5.3.1 | Description | 51 |
| 5.3.2 | Structure | 51 |
| 5.3.3 | Tags | 51 |
| 5.4 | Buttons definition section | 52 |
| 5.4.1 | Description | 52 |
| 5.4.2 | Structure | 53 |
| 5.4.3 | Tags | 53 |
| 5.5 | Text Items definition section | 54 |
| 5.5.1 | Description | 54 |
| 5.5.2 | Structure | 54 |
| 5.5.3 | Tags | 54 |
| 5.6 | Edit boxes definition section | 55 |
| 5.6.1 | Description | 55 |
| 5.6.2 | Structure | 55 |
| 5.6.3 | Tags | 56 |
| 5.7 | Choice items definition section | 57 |
| 5.7.1 | Description | 57 |
| 5.7.2 | Structure | 57 |
| 5.7.3 | Tags | 57 |
| 5.8 | Checkboxes definition section | 59 |
| 5.8.1 | Description | 59 |
| 5.8.2 | Structure | 59 |
| 5.8.3 | Tags | 59 |
| 5.9 | Listboxes definition section | 61 |
| 5.9.1 | Description | 61 |
| 5.9.2 | Structure | 61 |
| 5.9.3 | Tags | 61 |
| 5.10 | Grids | 63 |
| 5.10.1 | Description | 63 |
| 5.10.2 | Structure | 63 |
| 5.10.3 | Tags | 63 |
| 5.10.4 | Example | 65 |
| 6 | The Smart Client event model | 65 |
| 6.1 | The EVENTS tag | 66 |
| 6.2 | The EVENT tag | 66 |
| 6.2.1 | The BUTTONCLICK event | 66 |
| 6.2.2 | The MENUITEMSELECTED event | 66 |
| 6.2.3 | The DATA event | 67 |
| 6.3 | The ACTION tag | 67 |
| 6.3.1 | The OPEN action | 67 |
| 6.3.2 | The ARML action | 68 |
| 6.3.3 | The SAVE action | 68 |
| 6.3.4 | The PURGE action | 68 |
| 6.3.5 | The NOTIFY action | 68 |
| 6.3.6 | The CLOSE action | 68 |
| 6.3.7 | The ALERT action | 68 |
| 6.3.8 | The INTEGRATION action | 69 |
| 6.3.9 | The CLOSESCREEN action | 69 |
| 6.3.10 | The REFRESH action | 70 |
| 6.3.11 | The SAVEITEM action | 70 |
| 6.3.12 | The IF Action | 70 |
| Example of airix event model | | 73 |
| 7 | AVM-server system interactions | 75 |
| 7.1 | General | 75 |
| 7.1.1 | Description | 75 |
| 7.1.2 | Structure | 75 |
| 7.1.3 | Tags | 76 |
| 7.2 | Device Registration & deregistration package | 76 |
| 7.2.1 | Description | 76 |
| 7.2.2 | Structure | 76 |
| 7.2.3 | Tags | 77 |
| 7.2.4 | Example | 77 |
| 7.3 | Registration confirmation package | 77 |
| 7.3.1 | Description | 77 |
| 7.3.2 | Structure | 77 |
| 7.3.3 | Tags | 78 |
| 7.3.4 | Example | 78 |
| 7.4 | Find applications package | 79 |
| 7.4.1 | Description | 79 |
| 7.4.2 | Structure | 79 |
| 7.4.3 | Tags | 79 |
| 7.5 | Find applications confirmation package | 79 |
| 7.5.1 | Description | 79 |
| 7.5.2 | Structure | 79 |
| 7.5.3 | Tags | 80 |
| 7.6 | Application Registration & deregistration package | 80 |
| 7.6.1 | Description | 80 |
| 7.6.2 | Structure | 80 |
| 7.6.3 | Tags | 80 |
| 7.7 | Application registration & deregistration confirmation package | 81 |
| 7.7.1 | Description | 81 |
| 7.7.2 | Structure | 81 |
| 7.7.3 | Tags | 81 |
| 7.7.4 | Example | 82 |
| 7.8 | Setting the active device package | 83 |
| 7.8.1 | Description | 83 |
| 7.8.2 | Structure | 83 |
| 7.8.3 | Tags | 83 |
| 7.8.4 | Example | 83 |
| 7.9 | Set active device response | 83 |
| 7.9.1 | Description | 83 |
| 7.9.2 | Structure | 83 |
| 7.9.3 | Tags | 84 |
| 7.9.4 | Example | 84 |
| 7.10 | Invalid Application package | 84 |
| 7.10.1 | Description | 84 |
| 7.10.2 | Structure | 84 |
| 7.10.3 | Tags | 85 |
| 7.10.4 | Example | 85 |
| 8 | Application-server system interactions | 85 |
| 9 | ARML future developments | 85 |

### 1. INTRODUCTION

### 1.1 Purpose of document

This document describes the structure and syntax of the ARML language.

### 1.2 Audience

The document is intended to be read by AIRIX developers and users of ARML.

### 1.3 Definitions & Acronyms

| | |
|---|---|
| ARML | AIRIX Markup Language |
| XML | Extensible Markup Language |

### 2 ARML OVERVIEW

ARML is an XML markup language used by the AIRIX platform. It performs three tasks;
- Data is passed back and forth between the mobile server, AIRIX platform and enterprise application using ARML.
- The AIRIX Smart Client uses ARML to define the user interface for an AIRIX-enabled application on the mobile device
- The AIRIX server uses ARML to define that data that it stores for the application in its database.

### 2.1 ARML design considerations

ARML has been designed with the following goals in mind;
- Transactions and screen definitions should be as independent as possible
- AIRIX should be unaware of internals of the enterprise application
- Strict conformance to the XML specification will be enforced
- Operation should be transparent to the end user
- ARML packages should be readable as is
- The minimum number of characters needed should be used

### ARML usage

The diagram below illustrates how ARML is used.

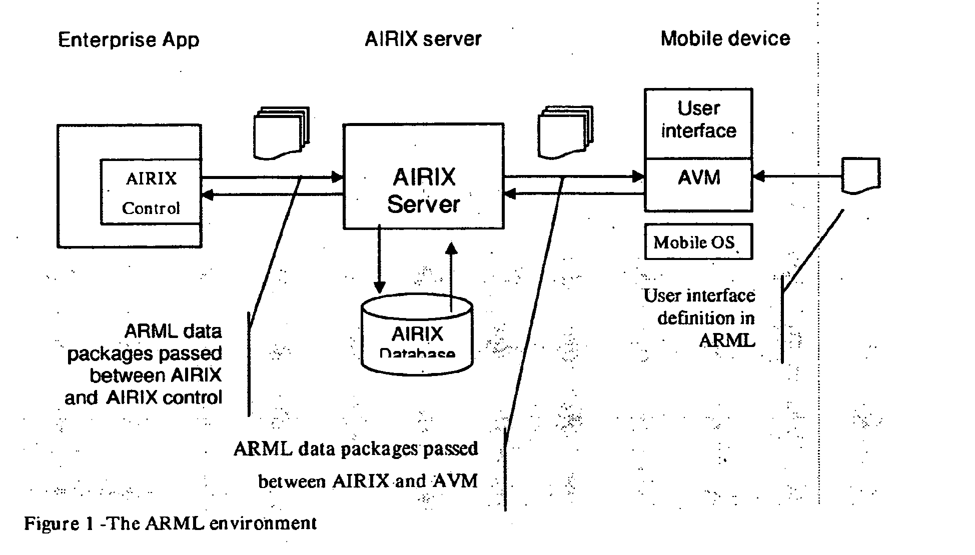

The key to ARML usage is the application definition file held on the AIRIX server. This file defines the AIRIX tables for the application, the allowed message set and the user interface definitions for the application on a given device.

### 2.2 The scratchpad area

The scratchpad is used as a temporary storage area where a global value or a value associated to a screen can be saved for future use. The syntax for a scratchpad value is as follows: screen scratchpad value: [SP*.screen.savename*] global scratchpad value: [SP.**.savename*]

The syntax for retrieving a global scratchpad value can also be used to retrieve screen scratchpad values.

### 2.3 System Variables and Functions

There are several variables that are available that will retrieve application and system values to be used throughout the application. The syntax for these variables are as follows:

### 2.3.1 Variables:

[DATE] - returns the current system date, formatted as dd mmm yy
[TIME] - returns the current system time, formatted as hh:mm:ss am/pm.
[SYS.VAR.DATE] - returns the current system date, formatted as dd mmm yy
[SYS.VAR.MOBILEID] - retrieves the device's Mobile ID
[SYS.VAR.APPNAME] - retrieves the name of the application.
[SYS.VAR.APPVERSION] - retrieves the version number of the application.
[SYS.VAR.SCVERSION] - retrieves the version number of the Smart Client.
[SYS.VAR.ARMLMAJOR] - retrieves the ARML major version of the application.
[SYS.VAR.ARMLMINOR] - retrieves the ARML minor version of the application.

### 2.3.2 Functions:

[SYS.FUNC.DATEADD([SYS.VAR.DATE],+-*x*)] - The Date Arithmetic tag is used to add or subtract days from the current date. In the tag, x represents the number of days added or subtracted. Developers can also choose to substitute a hard-coded date value in the Date Arithmetic tag, in the place of the [SYS.VAR.DATE] tag.

[SYS.FUNC.DATETOSTR([SYS.VAR.DATE],d mmm yyyy h:nn:ss tz)] - The Date To String tag is used to convert date data to a string value.

[SYS.FUNC.STRTODATE([SYS.VAR.DATE],d mmm yyyy h:nn:ss tz)] - The String to Date tag is used to convert string data to a date value, in the RFC 1123 format.

### 2.4 Single-Field Lookup

The single-field lookup will run a simple SELECT query with one where-clause to retrieve specific data. The syntax is as follows: [DB.DOLOOKUP(table, *field, wherefield, wherevalue*)]

### 3 ARML APPLICATION DEFINITION

### 3.1 General

### 3.1.1 Description

The application definition section defines the AIRIX tables and ARML data packages that are used for transactions involved with a specific application.

### 3.1.2 Structure

The ARML application definition has the following structure;

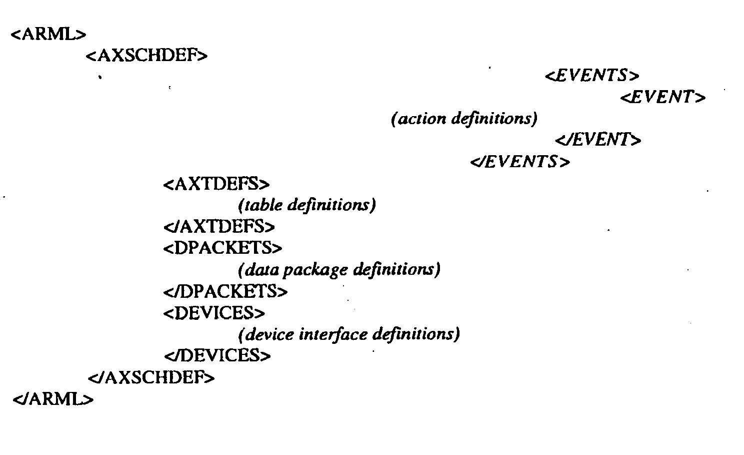

### 3.1.3 Tags

### 3.1.3.1 The <AXSCHDEF> tag

These tags (<AXSCHDEF>...</AXSCHDEF>) mark the start and end of the application definition. THE AXSCHDEF tag has two attributes;

| Attribute | Optional? | Description |
|---|---|---|
| APPNAME | No | The name of the application |
| VERSION | No | Which version of the application the file describes |
| DESC | No | A text description of the application for display purposes |
| ARMLMAJOR | No | The major version of the ARML language this application definition was created with. |
| ARMLMINOR | No | The minor version of the ARML language this application definition was created with. |

### 3.1.3.2 The <EVENTS> tag

The <EVENT> ... </EVENT> pair marks the start and end of a user-interface level event definition. See section 6 for a detailed discussion of the Smart Client event model.

### 3.1.3.3 The <EVENT> tag

The <EVENT> ... </EVENT> pair marks the start and end of a user-interface level event definition. See section 6 for a detailed discussion of the Smart Client event model.

### 3.1.3.4 The <AXTDEFS> tag

The <AXTDEFS> ... </AXTDEFS> pair marks the start and end of the table definitions section. It has no attributes.

### 3.1.3.5 The <DPACKETS> tag

The <DPACKETS>...</DPACKETS> pair marks the start and end of the data package definitions section. It has no attributes.

### 3.1.3.6 The <DEVICES> tag

The <DEVICES>...</DEVICES> pair marks the start and end of the device interface definitions section. It has no attributes.

### 3.2 Table Definitions Section

### 3.2.1 Description

The table definitions section defines the tables on the mobile device for the application

### 3.2.2 Structure

The table definitions section has the following structure;

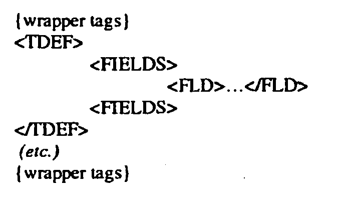

### 3.2.3 Tags

### 3.2.3.1 The <TDEF> tag

Each table definition is enclosed within the <TDEF> ... </TDEF> pair. The TDEF tag has the following attributes;

| Attribute | Optional? | Description |
|---|---|---|
| NAME | No | The number of table definitions in the section |
| PK | No | Which of the table fields is the primary key for the table |
| DELINDEX | No | The index of this table with respect to all the tables for specifying the delete order. This value is 1 based. |

### 3.2.3.2 The <FIELDS> tag

The <FIELDS>...</FIELDS> tag pair marks where the fields in a given table are defined.

The FIELDS tag has a no attributes.

### 3.2.3.3 The <FLD> tag

The <FLD>...</FLD> tag pair defines a single field in a table. Enclosed between the tags is the field name. The <FLD> tag has the following structure;

| Attribute | Optional? | Description |
|---|---|---|
| TYPE | No | The data type contained in the field. Permitted values are: |
| | | INT - integer value |
| | | STRING - a fixed-length string of n characters (see SIZE field) |
| | | MEMO - a string of max 65535 characters |
| | | AUTOINC - an integer value, automatically incremented by the database. This field will be read-only to the applications. |
| | | DATETIME - a datetime value |
| SIZE | No | If the TYPE is set to STRING, this field specifies the number of characters in the field |
| INDEXED | No | Specifies if the field needs to be indexed in the AIRIX database |
| REFERENCEFIELD | Yes | If this attribute is present, it defines that this field is a foreign key. The foreign table/field is given in the format "table(field)" |
| ALLOWNULL | No | Specifies if the field is allowed to have a null value |

### 3.2.4 Example

An email application would use 2 tables for storing sent emails.

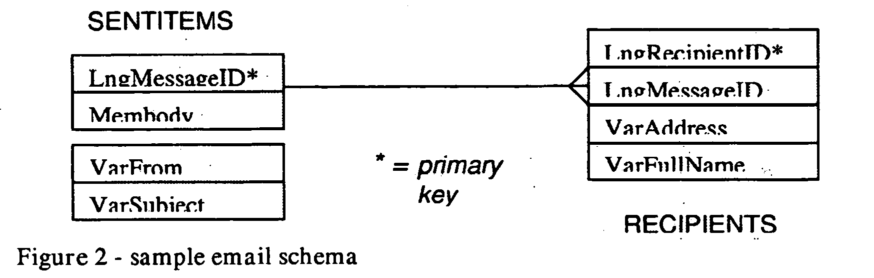

This translates into the following ARML fragment;

```
 <TDEF NAME="SENTITEMS" UPDATETYPE=NEW PK=LNGMESSAGEID DELINDEX=2>
  <FIELDS>
      <FLD TYPE="INT" SIZE="0" INDEXED="NO" REFERENCEFIELD=""
             ALLOWNULL="NO">LNGMESSAGEID</FLD>
      <FLD TYPE="STRING" SIZE="200" INDEXED="NO" REFERENCEFIELD=""
             ALLOWNULL="YES">VARFROM</FLD>
      <FLD TYPE="MEMO" SIZE="0" INDEXED="NO" REFERENCEFIELD=""
             ALLOWNULL="YES">MEMBODY</FLD>
      <FLD TYPE="STRING" SIZE="200" INDEXED="NO" REFERENCEFIELD=""
             ALLOWNULL="YES">VARSUBJECT</FLD>
  <MOLDS>
 </TDEF>
 <TDEF NAME="RECIPIENTS" UPDATETYPE=NEW PK=LNGRECIPIENTID DELINDEX=1>
  <FIELDS>
      <FLD TYPE="INT" SIZE="AUTOINC" INDEXED="NO" REFERENCEFIELD=""
             ALLOWNULL="NO">LNGMESSAGEID</FLD>
      <FLD TYPE="INT" SIZE="0" INDEXED="YES"
             REFERENCEFIELD="SENTITEMS(MESSAGEID)"
             ALLOWNULL="NO">LNGMESSAGEID</FLD>
      <FLD TYPE="STRING" SIZE="200" INDEXED="NO" REFERENCEFIELD=""
             ALLOWNULL="YES">VARFULLNAME</FLD>
      <FLD TYPE="STRING" SIZE="200" INDEXED="NO" REFERENCEFIELD=""
             ALLOWNULL="YES">VARADDRESS</FLD>
  </FIELDS>
 </TDEF>
```

Figure 3 - a sample table definition section

### 3.3 Package Definitions Section

### 3.3.1 Description

The package definitions section defines the structure of the application packages and the data that they carry.

### 3.3.2 Structure

The package definitions section has the following structure;

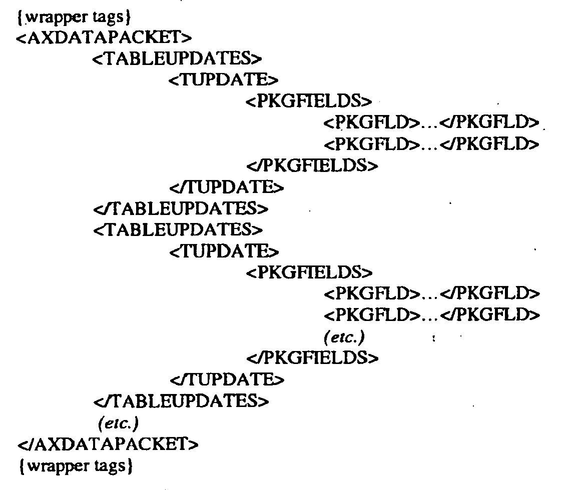

### 3.3.3 Tags

### 3.3.3.1 The <AXDATAPACKET> tag

The <AXDATAPACKET>...</AXDATAPACKET> pair delimits a package definition. The tag has the following attributes;

| Attribute | Optional? | Description |
|---|---|---|
| BODY | No | This field gives the name by which the data package is known |
| UPDATELOCALDATA | No | Specifies whether the package is to update the local database. |
| SENDTOAPP | No | Specifies whether the package is sent to the application server |

### 3.3.3.2 The <TABLEUPDATES> tag

The <TABLEUPDATES>...</TABLEUPDATES> pair marks the start and end of the table definitions section. It has no attributes.

### 3.3.3.3 The <TUPDATE> tag

Each table update is enclosed within the <TUPDATE>...</TUPDATE> pair. The TUPDATE tag has the following attributes;

| Attribute | Optional? | Description |
|---|---|---|
| TABLE | No | The table in the database that is updated |
| UPDATETYPE | No | The type of update that is being made to the database. Possible values are; |
| | | ADD - adds a new record into the table |
| | | DELETE - removes a record into the table |
| | | UPDATE - modifies a record in the table |
| WHEREFIELD | Yes | For a conditional update of a table, specifies the field and table to match on. This is in the format "table(field)". |
| WHEREPARAM | Yes | Text string specifying the value. This tag has no meaning and will be skipped unless the WHEREFIELD attribute has been specified. |
| SECTION | No | An identifier for the section in the data package |
| MULTIROW | No | Boolean field specifying whether multiple rows can be updated by the tag |
| MULTIROWIDENT | Yes | If the MULTIROW attribute is set to 'YES', this fields is required and specifies the |

### 3.3.3.4 The <PKGFIELDS> tag

The <PKGFIELDS>...</PKGFIELDS> tag pair marks where the fields in a given data package are defined. The PKGFIELDS tag has no attributes.

### 3.3.3.5 <The PKGFLD> tag

The <PKGFLD>...</PKGFLD> tag pair defines a single parameter in a given data package. Enclosed between the <PKGFLD>...</PKGFLD> tags is the field name. The <PKGFLD> tag has the following attributes;

| Attribute | Optional? | Description |
|---|---|---|
| NAME | No | This is the field in the AIRIX database that maps to the user interface field |
| PARAMTYPE | No | This defines the type of parameter. It can take two values; PROP - this means that the parameter appears as part of the tag definition |
| | | VALUE - this means that the parameter is contained between the two tags. Only one parameter in a given data package can be of this type |

### 3.3.4 Example

Using the table definitions example in section 3.2.4, when the user sends an email, a data package to transport the data would update the 'SENTITEMS' table and the 'RECIPIENTS' table. The following ARML fragment defines such a data package;

```
 <AXDATAPACKET BODY="ME" SENDTOMOBILE="NO" SENDTOAPP="YES">
  <TABLEUPDATES>
      <UPDATE TABLE="SENTITEMS" UPDATETYPE="ADD" WHEREFIELD='"' WHEREPARAM=""
             WHERETYPE="PROP" SECTION="MAIL" MULTIROW="NO" MULTIROWIDENT='"'>
          <FIELDS>
             <PKGFLD NAME="LNGMESSAGEID" PARAMTYPE="PROP">MSGID</PKGFLD>
             <PKGFLD NAME="VARFROM" PARAMTYPE="PROP">FROM</PKGFLD>
             <PKGFLD NAME="VARSUBJECT" PARAMTYPE="PROP">SUBJECT</PKGFLD>
             <PKGFLD NAME="MEMBODY" PARAMTYPE="VALUE">DATA</PKGFLD>
          </FIELDS>
      </TUPDATE>
      <TUPDATE TABLE="RECIPIENTS" UPDATETYPE="ADD" WHEREFIELD="" WHEREPARAM='"'
             WHERETYPE="PROP" SECTION="RECIPS" MULTIROW="YES"
             MULTIROWIDENT="RCP">
          <FIELDS>
             <PKGFLD NAME="LNGMESSAGEID" PARAMTYPE="PROP">MSGID</PKGFLD>
             <PKGFLD NAME="VARFULLNAME" PARAMTYPE="PROP">TO</PKGFLD>
             <PKGFLD NAME="VARADDRESS" PARAMTYPE="PROP">ADDRESS</PKGFLD>
          </FIELDS>
      </TUPDATE>
   </TABLEUPDATES>
 </AXDATAPACKET>
```

Figure 4 - a sample package definition

### 3.4 Device Interface Definitions Section

### 3.4.1 Description

The display definitions section contains the user interface definitions for the various mobile devices that an application supports.

### 3.4.2 Structure

The device display definitions section has the following structure;

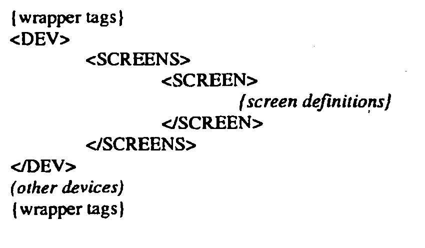

### 3.4.3 Tags

### 3.4.3.1 The <DEV> tag

The <DEV>...</DEV> pair delimits an interface definition for a specific device. The tag has the following attributes;

| Attribute | Optional? | Description |
|---|---|---|
| TYPE | No | The type of device. Allowed values are: |
| | | RIM - a Research in Motion Blackberry pager |
| | | WAP - a WAP phone |
| | | CE - Pocket PC |

### 3.4.3.2 The <SCREENS> tag

The <SCREENS>...</SCREENS> pair delimits the screens definition for a specific device. The tag has one attribute;

| Attribute | Optional? | Description |
|---|---|---|
| STSCRN | No | The first screen that is displayed when the application starts |

### 3.4.3.3 The <SCREEN> tag

The <SCREEN>...</SCREEN> pair, and its contents are described in section 5.1.3.1

### 3.4.4 Example

The following example shows the screen definitions section for an application that allows a user to view their inbox and the mails in it.

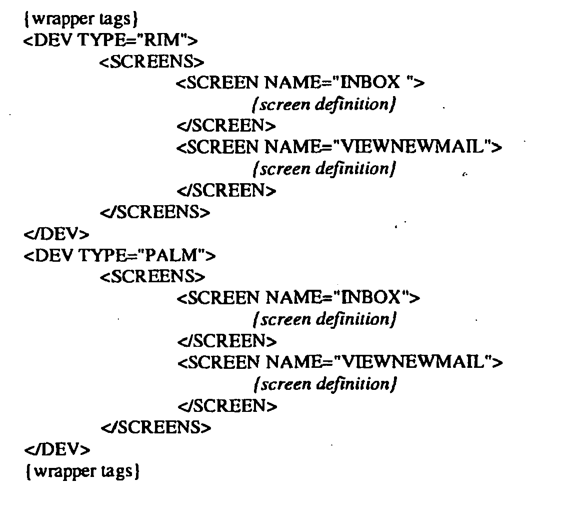

### 4 Application-Defined Packages

This section describes the format of application defined packages.

### 4.1 General

This section describes the general structure of an application-specific data package. As described in section , ;

### 4.1.1 Description

System level packages are sent between AIRIX and the application server, and between AIRIX and the AVM

### 4.1.2 Structure

An application defined package has the following structure;

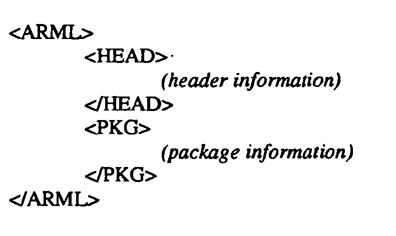

### 4.1.3 Tags

### 4.1.3.1 The <HEAD> tag

The <HEAD> tag is as described in section 7.1.3.1

### 4.1.3.2 The <PKG> tag

The <PKG>...</PKG> tags delimit the package data. The PKG tag has the following attributes;

| Attribute | Optional? | Description |
|---|---|---|
| TYPE | No | A text string identifying the type of package being sent |

### 4.2 Package information

The format and rules for application-defined data packages depend on the package definitions for that application.

### 4.2.1 Example

A sample data package following the rules in section 3.3.4 would have a body section like this;

```
 { wrapper tags}
 <PKG TYPE="ME">
  <MAIL MSGID="1" FROM="Tim Neil" FROMADDRESS="timn@nextair.com"
      SUBJECT="Hello Back">
  <DATA>I am responding to your message</DATA>
  </MAIL>
  <RECIPS>
      <RCP MSGID="1" TO="Jeff Jones"
          ADDRESS="jeff@nextair.com"></RCP>
      <RCP MSGID=" 1" TO="Scott Neil"
          ADDRESS="scottn@nextair.com"></RCP>
      <RCP MSGID="1" TO="Steve Hulaj"
          ADDRESS="steveh@nextair.com"></RCP>
  </RECIPS>
 </PKG>
 {wrapper tags}
```

Figure 5 - a sample package

We will use this sample package to illustrate how packages are derived from the package definition file. The first tag in the package is the BODY tag. This tag defines which type 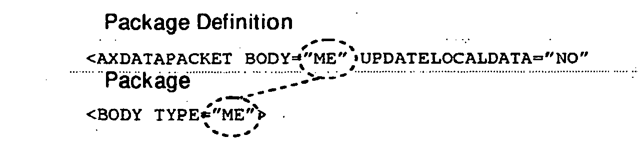 of package it is;

The package has two sections, which correspond to the two table update sections in the package definition;

### Package Definition

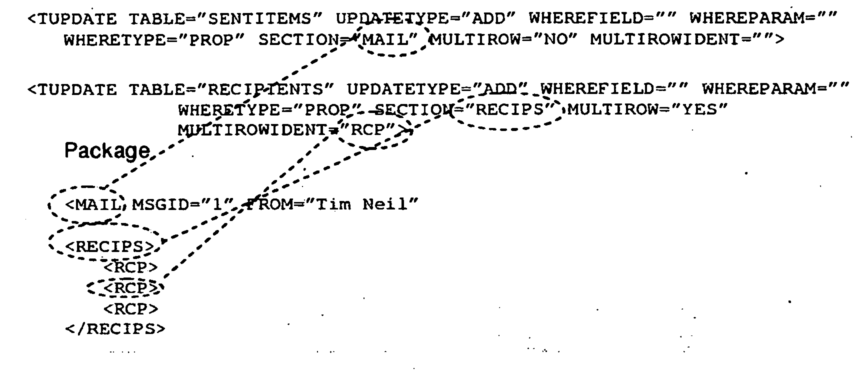

The 'MAIL' section updates the 'SENTITEMS' table in the database. It does not update multiple rows. The 'RECIPS' section updates the 'RECIPIENTS' table in the database; it does update multiple rows, and each row is contained within a pair of <RCP> tags.

Each of the MAIL and RCP tags have fields which are used to update the field in the database tables;

### Package Definition

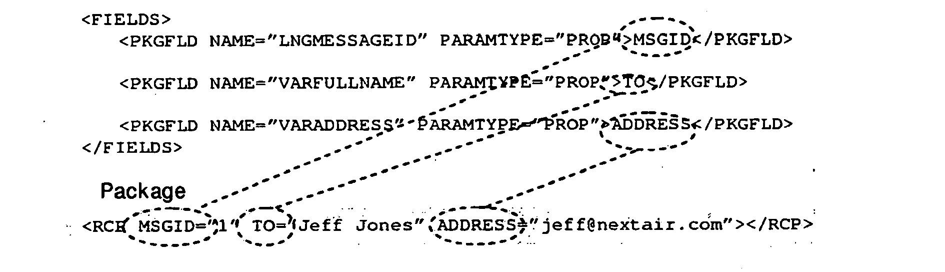

### 5 USER INTERFACE DEFINITIONS

### 5.1 General

### 5.1.1 Description

A screen definition file defines a single screen for a specific device.

### 5.1.2 Structure

A screen definition file has the following structure;

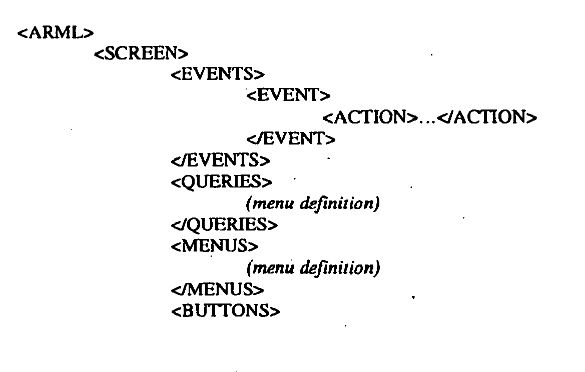

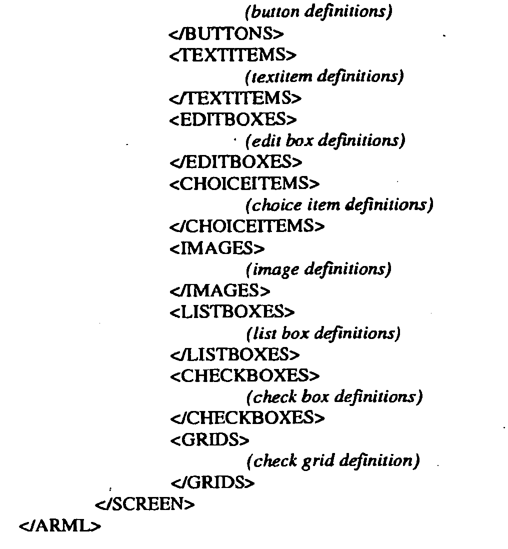

### 5.1.3 Tags

### 5.1.3.1 The SCREEN tag

The <SCREEN>...</SCREEN> pair marks the start and end of the screen definitions section. It has attribute -

| Attribute | Optional? | Description |
|---|---|---|
| NAME | No | An identifier for the screen. This is used to qualify variables and navigate between screens |
| TITLE | No | The title that appears for the screen. |
| BACKGROUND | Yes | If used, an image that appears behind the interface elements |
| ORDERED | Yes, only applicable on WAP | If yes, WML is created with ORDERED property set to true, if NO, WML is created with ORDERED property set to false. Only applicable on WAP. See WML standard for definition of ORDERED. |

### 5.1.3.2 The <EVENTS> tag

The <EVENT>...</EVENT> pair marks the start and end of a user-interface level event definition. See section 6 for a detailed discussion of the Smart Client event model.

### 5.1.3.3 The <EVENT> tag

The <EVENT>...</EVENT> pair marks the start and end of a user-interface level event definition. See section 6 for a detailed discussion of the Smart Client event model.

### 5.1.3.4 The <ACTION> tag

The <ACTION>...</ACTION> pair marks the start and end of an action definition. See section 6 for a detailed discussion of the Smart Client event model.

### 5.1.3.5 The QUERIES tag

The <QUERIES>... </QUERIES> pair marks the start and end of the queries definitions section. It has no attributes.

### 5.1.3.6 The MENUS tag

The <MENUS>...</MENUS> pair marks the start and end of the menu definition section. It has no attributes.

### 5.1.3.7 The BUTTONS tag

The <BUTTONS>...</BUTTONS> pair marks the start and end of the button definitions section. It has no attributes.

### 5.1.3.8 The TEXTITEMS tag

The <TEXTITEMS>... <TEXTITEMS> pair marks the start and end of the text items section. It has no attributes.

### 5.1.3.9 The EDITBOXES tag

The <EDITBOXES>...</EDITBOXES> pair marks the start and end of the editboxes section. It has no attributes.

### 5.1.3.10 The CHOICEITEMS tag

The <CHOICEITEMS>... </CHOICEITEMS> pair marks the start and end of the choiceitems section. It has no attributes.

### 5.1.3.11 The IMAGES tag

The <IMAGES>...</IMAGES> pair marks the start and end of the images section. It has no attributes.

### 5.1.3.12 The CHECKBOXES tag

The <CHECKBOXES>...</CHECKBOXES> pair marks the start and end of the checkboxes section. It has no attributes.

### 5.1.3.13 The LISTBOXES tag

The <LISTBOXES>...</LISTBOXES> pair marks the start and end of the listboxes section. It has no attributes.

### 5.1.3.14 The GRIDS tag

The <GRIDS>...</GRIDS> pair marks the start and end of the grids section. It has no attributes.

### 5.2 Queries definition section

### 5.2.1 Description

The queries definition section describes any queries that need to be run to populate a screen.

### 5.2.2 Structure

The queries definition section has the following structure;

```
 {wrapper tags}
 <QUERIES>
      <QUERY>
     <W>...</W>
      </QUERY>
 </QUERIES>
 {wrapper tags}
```

### 5.2.3 Tags

### 5.2.3.1 The <QUERIES> tag

The <QUERIES> ... </QUERIES> pair marks the start and end of query definition section. It has no attributes.

### 5.2.3.2 The <QUERY> tag

The <QUERY>...</QUERY> pair marks the start and end of a given query. It has the following attributes;

| Attribute | Optional? | Description |
|---|---|---|
| NAME | No | Name of the query. |
| TABLE | No | The table in the database that is updated |
| ORDERBY | Yes | Specifies the name of the field in the table that the results are to be ordered on. |
| ORDERDIR | Yes | ASC or DESC, sort ascending or descending respectively. If ORDERBY is present and ORDERDIR is not, ASC is assumed. |

### 5.2.3.3 The <W> tag

The <W>...</W> pair marks the start and end of a given where-clause. The value of the parameter is contained within the <W>...</W> tags. This value can be a specific value or a reference to a user interface field in the format "[SP.screen.savename] or [QU.query.field]". It has the following attributes;

| Attribute | Optional? | Description |
|---|---|---|
| F | No | Specifies the field to match on. |
| E | No | Specifies the expression type. Available expression types include: |
| | | EQ |
| | | NE |
| | | LT |
| | | GT |
| | | BW (applicable only to fields of type STRING) |

### 5.3 Menu definition section

### 5.3.1 Description

The menu definition section describes the menu for a given screen.

### 5.3.2 Structure

The menu definition section has the following structure;

```
 {wrapper tags}
 <MENUS>
 <MENU>
      <MENUITEM>
             <EVENTS>
                    <EVENT>
                            <ACTION>...</ACTION>
                    </EVENT>
             </EVENTS>
      </MENUITEM>
 </MENU>
 </MENUS>
 { wrapper tags}
```

### 5.3.3 Tags

### 5.3.3.1 The <MENUS> tag

The <MENUS> ... </MENUS> pair marks the start and end of menu definition section. It has no attributes.

### 5.3.3.2 The <MENU> tag

The <MENU> ... </MENU> pair marks the start and end of a menu definition. It has the following attributes.

| Attribute | Optional? | Description |
|---|---|---|
| NAME | No | An internal identifier for the menu |
| CAPTION | No | The text that appears for this item in the menu |

### 5.3.3.3 The <MENUITEM> tag

The <MENUITEM>...</MENUITEM> pair marks the start and end of a menuitem definition. It has the following tags;

| Attribute | Optional? | Description |
|---|---|---|
| NAME | No | An internal identifier for the menu |
| CAPTION | No | The text that appears for this item in the menu |
| INDEX | Yes | The index of this menu item with respect to all of the menu items on this menu. |
| READONLY | Yes | If True, the menu item is inactive. False is the default. |

### 5.3.3.4 The <EVENTS> tag

The <EVENT>...</EVENT> pair marks the start and end of a user-interface level event definition. See section 6 for a detailed discussion of the Smart Client event model.

### 5.3.3.5 The <EVENT> tag

The <EVENT>...</EVENT> pair marks the start and end of a user-interface level event definition. See section 6 for a detailed discussion of the Smart Client event model.

### 5.3.3.6 The <ACTION> tag

The <ACTION>...</ACTION> pair marks the start and end of an action definition. See section 6 for a detailed discussion of the Smart Client event model.

### 5.4 Buttons definition section

### 5.4.1 Description

The buttons definition section describes the buttons that appear on a given screen.

### 5.4.2 Structure

The buttons definition section has the following structure;

```
 { wrapper tags}
 <BTN>
      <EVENTS>
             <EVENT>
                    <ACTION>... </ACTION>
             </EVENT>
      </EVENTS>
 </BTN>
 {wrapper tags}
```

### 5.4.3 Tags

### 5.4.3.1 The BTN tag

The <BTN>...</BTN> pair marks the start and end of a button definition. It has one attribute -

| Attribute | Optional? | Description |
|---|---|---|
| NAME | No | An identifier for the button. |
| INDEX | No | The order in which the button appears |
| CAPTION | No | The caption that appears on a given button |
| X | Yes | The X-coordinate of the button on the screen. This attribute may not be meaningful in some display environments, in which case it would be skipped without processing by the parser |
| Y | Yes | The Y-coordinate of the button on the screen. This attribute may not be meaningful in some display environments, in which case it would be skipped without processing by the parser |
| HT | Yes | This is the Height of the button. This attribute may not be meaningful in some display environments, in which case it would be skipped without processing by the parser |
| WT | Yes | This is the Width of the Button. This attribute may not be meaningful in some display environments, in which case it would be skipped without processing by the parser |
| READONLY | Yes | If True, the button is not enabled. False is the default. |

### 5.4.3.2 The <EVENTS> tag

The <EVENT>...</EVENT> pair marks the start and end of a user-interface level event definition. See section 6 for a detailed discussion of the Smart Client event model.

### 5.4.3.3 The <EVENT> tag

The <EVENT>...</EVENT> pair marks the start and end of a user-interface level event definition. See section 6 for a detailed discussion of the Smart Client event model.

### 5.4.3.4 The <ACTION> tag

The <ACTION>...</ACTION> pair marks the start and end of an action definition. See section 6 for a detailed discussion of the Smart Client event model.

### 5.5 Text Items definition section

### 5.5.1 Description

The text items definition

### 5.5.2 Structure

The text items section has the following structure;

```
 {wrapper tags}
 <TI>
      <EVENTS>
             <EVENT>
                    <ACTION>...</ACTION>
             </EVENt>
      </EVENTS>
 </TI>
 {wrapper tags}
```

### 5.5.3 Tags

### 5.5.3.1 The TI tag

The <TI>...</TI> pair marks the start and end of the screen definitions section. It has attribute -

| Attribute | Optional? | Description |
|---|---|---|
| INDEX | No | The order in which the text item appears |
| NAME | No | An Identifier for the Text Item |
| CAPTION | No | Text to appear on the Text Item |
| X | Yes | The X-coordinate of the text item on the screen. This attribute may not be meaningful in some display environments, in which case it would be skipped without processing by the parser |
| Y | Yes | The Y-coordinate of the text item on the screen. This attribute may not be meaningful in some display environments, in which case it would be skipped without processing by the parser |
| HT | Yes | This is the Height of the Text Item. This attribute may not be meaningful in some display environments, in which case it would be skipped without processing by the parser |
| WT | Yes | This is the Width of the Text Item. This attribute may not be meaningful in some display environments, in which case it would be skipped without processing by the parser |

### 5.5.3.2 The <EVENTS> tag

The <EVENT>...</EVENT> pair marks the start and end of a user-interface level event definitio-n. See section 6 for a detailed discussion of the Smart Client event model.

### 5.5.3.3 The <EVENT> tag

The <EVENT>...</EVENT> pair marks the start and end of a user-interface level event definition. See section 6 for a detailed discussion of the Smart Client event model.

### 5.5.3.4 The <ACTION> tag

The <ACTION>...</ACTION> pair marks the start and end of an action definition. See section 6 for a detailed discussion of the Smart Client event model.

### 5.6 Edit boxes definition section

### 5.6.1 Description

The edit boxes definition section describes what edit boxes exist for the screen.

### 5.6.2 Structure

The edit boxes section has the following structure;

```
 {wrapper tags}
 <EB>
      <EVENTS>
             <EVENT>
                     <ACTION>...</ACTION>
             </EVENT>
      </EVENTS>
 </EB>
 {wrapper tags}
```

### 5.6.3 Tags

### 5.6.3.1 The EB tag

The <EB>...</EB> pair marks an edit box definition. It has the following attributes -

| Attribute | Optional? | Description |
|---|---|---|
| NAME | No | An identifier for the edit box. |
| TEXT | No | The text to display in the edit box before any entry has been made. Only used if the DATASRC attribute is invalid or omitted. Can be a scratchpad or query value of the form [SP.screen.savename] or [QU.query.field]. |
| INDEX | No | The order in which the edit box appears |
| CAPTION | No | The caption for on a given edit box. |
| MULTILINE | No | Boolean field that indicates whether the edit box is a multiline field. |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the edit box on the screen. This attribute may not be meaningful in some display environments, in which case it would be skipped without processing by the parser |
| Y | Yes | The Y-coordinate of the edit box on the screen. This attribute may not be meaningful in some display environments, in which case it would be skipped without processing by the parser |
| HT | Yes | The Height of the Edit Box. This attribute may not be meaningful in some display environments, in which case it would be skipped without processing by the parser |
| WT | Yes | The Width of the Edit Box. This attribute may not be meaningful in some display environments, in which case it would be skipped without processing by the parser |
| FT | Yes | Specifies the type of value expected (INT, STRING, MEMO,DATETIME) for the VM to validate prior to continuing a Save. If omitted, STRING is the default data type. |
| DATASRC | Yes | If present, the query and field in the query that populates this edit box. This is given in the format "query.field". |
| READONLY | Yes | If "TRUE" the edit box will be read only, otherwise it is editable. "FALSE is the default value. |

### 5.6.3.2 The <EVENTS> tag

The <EVENT>...</EVENT> pair marks the start and end of a user-interface level event definition. See section 6 for a detailed discussion of the Smart Client event model.

### 5.6.3.3 The <EVENT> tag

The <EVENT>...</EVENT> pair marks the start and end of a user-interface level event definition. See section 6 for a detailed discussion of the Smart Client event model.

### 5.6.3.4 The <ACTION> tag

The <ACTION>...</ACTION> pair marks the start and end of an action definition. See section 6 for a detailed discussion of the Smart Client event model.

### 5.7 Choice items definition section

### 5.7.1 Description

The choice item definitions section describes the choice items that exist on a given screen. A choice item is an interface item that requires the user to make a selection from a list of options. It can be represented in different ways on different devices; on a RIM pager, it is a choice box, while on a WinCE device, it is a drop-down list.

### 5.7.2 Structure

The choice items section has the following structure;

```
 {wrapper tags}
 <CHOICE>
      <EVENTS>
             <EVENT>
                     <ACTION>...</ACTION>
             </EVENT>
      </EVENTS>
      <ITEMS>
              <I>...</I>
      </ITEMS>
 </CHOICE>
 {wrapper tags}
```

### 5.7.3 Tags

### 5.7.3.1 The <CHOICE> tag

The <CHOICE>...</CHOICE> pair marks the start and end of a choice item definition. It has these attributes -

| Attribute | Optional? | Description |
|---|---|---|
| NAME | No | An identifier for the choice item. |
| TEXT | No | The text to display in the choice item before any selection has been made. |
| INDEX | No | The order in which the choice item appears |
| CAPTION | No | The caption that appears for a given choice item |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the choice item on the screen. This attribute may not be meaningful in some display environments, in which case it would be skipped without processing by the parser |
| Y | Yes | The Y-coordinate of the choice item on the screen. This attribute may not be meaningful in some display environments, in which case it would be skipped without processing by the parser |
| DATASRC | Yes | If present, the query and field in the query that populates this choice item. This is given in the format "query.field". |
| IDDATASRC | Yes | If present, the query and field in the query that populates the Ids for this choice item. This is given in the format "query.field". The ID values created by the attributes should correspond directly to the choice item values. I.e. they should create a value, id pair. |
| READONLY | Yes | If "True", the control cannot be modified. "False" is the default. |
| SI | Yes | The value to indicate which item of the choice item is to be selected when loaded. This value will be compared with the ID property (hard-coded items) or the IDDATASRC property (database items). |

### 5.7.3.2 The <ITEMS> tag

The <ITEMS>...</ITEMS> pair marks the start and end of a list of items to be included in the in the choice item. If a datasrc is specified, the <ITEMS> section is ignored.

### 5.7.3.3 The <I> tag

The <I>...</I> pair marks the start and end of an individual item in the choice items list. It has the following attributes:

| Attribute | Optional? | Description |
|---|---|---|
| ID | Yes | An id used to identify this item in the list. |

The value between the pair is the text value that is to be displayed in the choice item.

### 5.7.3.4 The <EVENTS> tag

The <EVENT>...</EVENT> pair marks the start and end of a user-interface level event definition. See section 6 for a detailed discussion of the Smart Client event model.

### 5.7.3.5 The <EVENT> tag

The <EVENT>...</EVENT> pair marks the start and end of a user-interface level event definition. See section 6 for a detailed discussion of the Smart Client event model.

### 5.7.3.6 The <ACTION> tag

The <ACTION>...</ACTION> pair marks the start and end of an action definition. See section 6 for a detailed discussion of the Smart Client event model.

### 5.8 Checkboxes definition section

### 5.8.1 Description

The checkboxes section describes a check box that appears on a given screen.

### 5.8.2 Structure

The checkboxes section has the following structure;

```
 {wrapper tags}
      <CHK>
             <EVENTS>
                    <EVENT>
                           <ACTION>... </ACTION>
                    </EVENT>
             </EVENTS>
      </CHK>
 {wrapper tags}
```

### 5.8.3 Tags

### 5.8.3.1 The CHK tag

The <CHK>...</CHK> pair marks a check box definition

| Attribute | Optional? | Description |
|---|---|---|
| NAME | No | An identifier for the check box. |
| INDEX | No | The index of this control with respect to the list of all controls on the screen. |
| CAPTION | No | The text to be displayed for this check box if the DATASRC is not available or is not specified. |
| Save | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the check box on the screen. This attribute may not be meaningful in some display environments, in which case it would be skipped without processing by the parser |
| Y | Yes | The Y-coordinate of the check box on the screen. This attribute may not be meaningful in some display environments, in which case it would be skipped without processing by the parser |
| HT | Yes | The Height of the Checkbox. This attribute may not be meaningful in some display environments, in which case it would be skipped without processing by the parser |
| WT | Yes | The Width of the Checkbox. This attribute may not be meaningful in some display environments, in which case it would be skipped without processing by the parser |
| DATASRC | Yes | If present, the query and field in the query that populates this check box. This is given in the format "query.field". |
| VALUE | Yes | If present, specifies the initial state of the check box ('TRUE' = checked, 'FALSE' = Unchecked. If unspecified, FALSE is the default value. |
| READONLY | Yes | If "TRUE" the check box cannot be modified. "FALSE" is the default value. |

### 5.8.3.2 The <EVENTS> tag

The <EVENT>...</EVENT> pair marks the start and end of a user-interface level event definition. See section 6 for a detailed discussion of the Smart Client event model.

### 5.8.3.3 The <EVENTS> tag

The <EVENT>...</EVENT> pair marks the start and end of a user-interface level event definition. See section 6 for a detailed discussion of the Smart Client event model.

### 5.8.3.4 The <ACTION> tag

The <ACTION>...</ACTION> pair marks the start and end of an action definition. See section 6 for a detailed discussion of the Smart Client event model.

### 5.9 Listboxes definition section

### 5.9.1 Description

The listboxes section describes a list box that appears on a given screen.

### 5.9.2 Structure

The listboxes section has the following structure;

```
 {wrapper tags}
      <LB>
             <EVENTS>
                    <EVENT>
                            <ACTION> ... </ACTION>
             </EVENTS>
             </EVENTS>
             <ITEMS>
                    <I>...</I>
             </ITEMS>
      </LB>
 {wrapper tags}
```

### 5.9.3 Tags

### 5.9.3.1 The LB tag

The <LB>...</LB> pair marks a list box definition

| Attribute | Optional? | Description |
|---|---|---|
| NAME | No | An identifier for the list box. |
| INDEX | No | The index of this control with respect to all of the controls on the screen. |
| CAPTION | No | The text to be displayed as the title of this list box, where applicable. |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the list box on the screen. This attribute may not be meaningful in some display environments, in which case it would be skipped without processing by the parser |
| Y | Yes | The Y-coordinate of the list box on the screen. This attribute may not be meaningful in some display environments, in which case it would be skipped without processing by the parser |
| HT | Yes | The Height of the Listbox. This attribute may not be meaningful in some display environments, in which case it would be skipped without processing by the parser |
| WT | Yes | The Width of the Listbox. This attribute may not be meaningful in some display environments, in which case it would be skipped without processing by the parser |
| DATASRC | Yes | If present, the query and field in the query that populates this list box. This is given in the format "query.field". |
| IDDATASRC | Yes | If present, the query and field in the query that populates the list box Ids. This is given in the format "query.field". This value will create a list of ID values that correspond to the list box values in DATASRC. I.e. they should create a value, id pair. |
| READONLY | Yes | If "TRUE" the list box cannot be modified. "FALSE" is the default. |
| SI | Yes | The value to indicate which item of the choice item is to be selected when loaded. This value will be compared with the ID property (hard-coded items) or the IDDATASRC property (database items). |

### 5.9.3.2 The <ITEMS> tag

The <ITEMS>...</ITEMS> pair marks the start and end of a list of items to be included in the in the list box. If a datasrc is specified, the <ITEMS> section is ignored.

### 5.9.3.3 The <I> tag

The <I>...</I> pair marks the start and end of an individual item in the list box items list. It has the following attributes:

| Attribute | Optional? | Description |
|---|---|---|
| ID | Yes | An id used to identify this item in the list. |

The value between the pair is the text value that is to be displayed in the list box. Can be a scratchpad or query value of the form [SP.screen.savename] or [QU.query.field].

### 5.9.3.4 The <EVENTS> tag

The <EVENT>...</EVENT> pair marks the start and end of a user-interface level event definition. See section 6 for a detailed discussion of the Smart Client event model.

### 5.9.3.5 The <EVENT> tag

The <EVENT>...</EVENT> pair marks the start and end of a user-interface level event definition. See section 6 for a detailed discussion of the Smart Client event model.

### 5.9.3.6 The <ACTION> tag

The <ACTION>...</ACTION> pair marks the start and end of an action definition. See section 6 for a detailed discussion of the Smart Client event model.

### 5.10 Grids

### 5.10.1 Description

Grids allow data to be displayed in row-column format. Grids can display data from a data source (query) or they can contain hard coded values. Each column in a grid can be visible or hidden. Hidden values are maintained, but not visible to the user.

### 5.10.2 Structure

The grids section has the following structure;

```
 {wrapper tags }
      <GRID>
             <COLS>
                    <COL> ... </COL>
             </COLS>
             <ROWS>
                     <R>
                            <V> ... </V>
                     </R>
             </ROWS>
      </GRID>
 {wrapper tags}
```

### 5.10.3 Tags

### 5.10.3.1 GRID Tag

<GRID>...</GRID> The grid item itself will have the following attributes

| Attribute | Optional? | Description |
|---|---|---|
| NAME | No | An identifier for the edit box. |
| INDEX | No | The order in which the edit box appears |
| X | Yes | The X-coordinate of the edit box on the screen. This attribute may not be meaningful in some display environments, in which case it would be skipped without processing by the parser |
| Y | Yes | The Y-coordinate of the edit box on the screen. This attribute may not be meaningful in some display environments, in which case it would be skipped without processing by the parser |
| HT | Yes | The Height of the Edit Box. This attribute may not be meaningful in some display environment, in which case it would be skipped without processing by the parser |
| WT | Yes | The Width of the Edit Box. This attribute may not be meaningful in some display environments, in which case it would be skipped without processing by the parser |
| GRDSRC | Yes | This is the Query on the screen that will provide the data to the grid. No field name will be specified in this value |

### 5.10.3.2 COLS Tag

<COLS>...</COLS> This tag contains no attributes. But instead contains all the columns that are associated with the grid in the order in which they appear from left to right.

### 5.10.3.3 COL Tag

<COL>...</COL> This tag will determine the column specification for the grid. The attributes for this item are the following:

| Attribute | Optional? | Description |
|---|---|---|
| CAPTION | Yes | This is the caption that appears at the top of the grid where applicable. |
| FIELDNAME | Yes | This field name represents the Field to pull information from out of the GRDSRC of the grid control. |
| SAVE | No | This true false value will be checked when the SAVE action is called to save values to the scratchpad |
| SAVENAME | Yes | This is the name in which the data will be saved when the SAVE action is called and the column is marked for Saving |
| WT | Yes | The Width of the Edit Box. This attribute may not be meaningful in some display environments, in which case it would be skipped without processing by the parser |

### 5.10.3.4 ROWS Tag

<ROWS>...</ROWS> This will Indicate any hard coded rows that would be created in the design studio. It does not contain any attributes but instead contains all the row definitions.

### 5.10.3.5 R Tag

<R>...</R> This is the row declaration that contains all the values for the row that has been hard coded. It has no attributes itself, but contains the value definitions for the row.

### 5.10.3.6 V Tag

<V>...</V> This definition contains the data that is related to the ROW and to the column.

### 5.10.4 Example

An example of a grid declaration is as follows:

```
 <GRID INDEX="2" NAME="mygrid" X=" 10" Y="50" HT="100" WT="100" GRDSRC="QUERY1">
 <COLS>
 <COL CAPTION="Id" FIELDNAME="IngID" SAVE="TRUE" SAVENAME="IngID" WT="20"></COL>
 <COL CAPTION="Subject" FIELDNAME="strSubject" SAVE="TRUE" SAVENAME="Sub" WT="80"></COL>
 </COLS>
 <ROWS>
  <R>
   <V>343432</V>
   <V>This is a subject</V>
  <R>
  <R>
   <V>5456</V>
   <V>This is another subject</V>
  </R>
 </ROWS>
 </GRID>
```

### 6 THE SMART CLIENT EVENT MODEL

The Smart Client has a set of actions that it ties to events. Events can occur at the application level, the screen level or the user interface item level; an application level event is listened for throughout the operation of the application, a screen level event is listened for while the screen is displayed, and so on. If an action for an event is defined at multiple levels, the lowest level has precedence; i.e., user interface actions override screen level actions, which override application level actions. An attempt to list an event multiple times at the same level (application, screen, item) is invalid and will generate an error message.
The following ARML fragment illustrates this schema (tags and attributes not relevant to the event model have been omitted);

```
      <AXTSCHDEF>
             <EVENTS>
                    <EVENT>
                           <ACTION>...</ACTION>
                           <ACTION> ... </ACTION>
                    <EVENTS>
                    <EVENT>
                           <ACTION>... </ACTION>
                    </EVENT>
             </EVENTS>
             <INTERFACE>
                    <SCREEN>
                           <EVENT>
                                   <ACTION>...</ACTION>
                           </EVENT>
                           <EVENT>
                                   <ACTION>... </ACTION>
                           </EVENT>
                           <BUTTON>
                                   <EVENT>
                                          <ACTION>...</ACTION>
                                   </EVENT>
                                   <EVENT>
                                          <ACTION>...</ACTION>
                                   </EVENT>
                           </BUTTON>
                    </SCREEN>
             </INTERFACE>
     </AXTSCHDEF>
```

### 6.1 The EVENTS tag

The <EVENTS>...</EVENTS> pair marks the start and end of the events section. It has no attributes.

### 6.2 The EVENT tag

The <EVENT>...</EVENT> pair marks the start and end of an event definition. It has the following attributes;

| Attribute | Optional? | Description |
|---|---|---|
| TYPE | No | The type of event that should be performed when the button is pushed. |
| | | Allowed values are; |
| | | BUTTONCLICK |
| | | MENUITEMSELECTED |
| | | DATA |

### 6.2.1 The BUTTONCLICK event

The button click event occurs when the user selects a button. It has no attributes.

### 6.2.2 The MENUITEMSELECTED event

The menu items selected event occurs when the user selects a menu item. It has no attributes.

### 6.2.3 The DATA event

The data event occurs when ARML data is received from the wireless interface. It has the following attributes;

| Attribute | Optional? | Description |
|---|---|---|
| NAME | No | The identifier of the specific package |

### 6.3 The ACTION tag

The <ACTION>...</ACTION> pair marks the start and end of an event definition. It has one fixed attribute, and a number of attributes that may or may not appear depending on the type of action required. The fixed attribute is;

| Attribute | Optional? | Description |
|---|---|---|
| TYPE | No | The type of action that should be performed when the button is pushed. |
| | | Allowed values are; |
| | | OPEN |
| | | ARML |
| | | SAVE |
| | | PURGE |
| | | NOTIFY |
| | | CLOSE |
| | | ALERT |
| | | IF...Then...Else |
| | | CLOSESCREEN |
| | | REFRESH |
| | | SAVEITEM |

### 6.3.1 The OPEN action

The open action tells the Smart Client to open a new screen. It adds one extra attribute to the ACTION tag;

| Attribute | Optional? | Description |
|---|---|---|
| NAME | No | The name of the screen to open |
| NEWINST | Yes | If true, a new instance of the screen is created. If false, the least recently used instance of the screen is opened and the data is not refreshed. True is the default. |

### 6.3.2 The ARML action

The arml action tells the Smart Client to compose and send an arml package. It does not add any attributes to the ACTION tag, but has the following subtag;

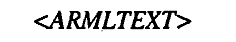

Contained between the <ARMLTEXT>...</ARMLTEXT> pair is one of the application-defined data packages. Individual data items are marked with the user interface item that their value should be taken from, in the format "[SP.*screen.savename*]"*,* or [QU.*query.field*]. If *screen* is not the current screen, then the Smart Client will look for the data in its scratchpad. See section 0 for an example of the ARML action.

### 6.3.3 The SAVE action

The save action tells the Smart Client to save all fields marked as persistent (i.e., they are defined with SAVE="Yes") to be saved to the scratchpad area. It has no attributes.

### 6.3.4 The PURGE action

The purge action tells the Smart Client to clear all fields that have been saved to the scratchpad. It has no attributes.

### 6.3.5 The NOTIFY action

The notify action tells the Smart Client to activate the configured notification on a device. For devices where this has no meaning, it will cause a beep to be played. It has no attributes.

### 6.3.6 The CLOSE action

The close action tells the Smart Client to close the application. It has no attributes.

### 6.3.7 The ALERT action

The alert action tells the Smart Client to display an alert item (e.g., a message box on Windows, an alert box on the RIM pager, an alert card on WAP). It has the following attributes;

| Attribute | Optional? | Description |
|---|---|---|
| CAPTION | Yes | The caption to display in the title bar of the message box |
| TEXT | Yes | The text to display in the message box |

### 6.3.8 The INTEGRATION action

The integration action tells the Smart Client to pass data to an interface exposed on a device. For example a COM interface on Pocket PC. This action will allow the developer to pass a parameter into an exposed method and then also save the result of that method in a global scratchpad value. The contents of the integration action's element are the input values to be passed to the interface. It has the following attributes;

| Attribute | Optional? | Description |
|---|---|---|
| CLSID | No | This is the class identifier of the component that is to be called. |
| SAVE | No | This tells the smart client if it should save the result into a global scratchpad value or not. |
| SAVENAME | Yes | This is the name of the global scratchpad value |

### Example ARML:

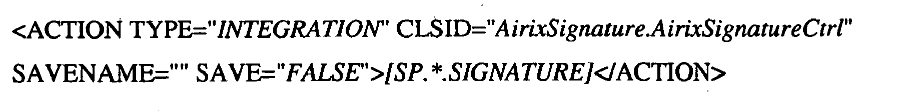

### 6.3.9 The CLOSESCREEN action

The close screen action tells the Smart Client to close all open instances of the screen specified by name in the NAME attribute. This action has the following attributes:

| Attribute | Optional? | Description |
|---|---|---|
| NAME | No | Name of the screen to close. |

### 6.3.10 The REFRESH action

The refresh action tells the Smart Client to re-run any queries and re-initialize all UI elements on the screen with the name specified by the NAME attribute. If there are multiple open instances of the screen, all open instances will be refreshed. The refresh action has the following attributes:

| Attribute | Optional? | Description |
|---|---|---|
| NAME | No | Name of the screen to refresh. |

### 6.3.11 The SAVEITEM action

The saveitem action tells the Smart Client to create a new scratchpad item or to edit an existing scratchpad item. The value of the scratchpad item is defined within the <ACTION> ... </ACTION> tags. The saveitem action has the following attributes:

| Attribute | Optional? | Description |
|---|---|---|
| SPN | No | Name of the scratchpad item to create or modify. |

### 6.3.12 The IF Action

This action will contain two lists of actions. One a list of actions to perform if the condition evaluates to TRUE (IFLIST), and another list of actions to perform if the condition evaluates to FALSE (ELSEIFLIST).

The structure of the action is as follows:

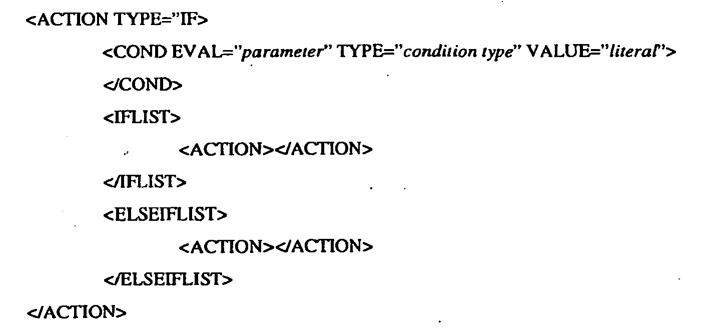

### 6.3.12.1 Conditions (COND)

Conditions are used in conjunction with the IF Action. Conditions are specified as follows:

| Attribute | Optional? | Description |
|---|---|---|
| EVAL | NO | Specifies the parameter to be evaluated. Can be hard coded, scratchpad, or |
| | | query values. It is the "input" to the function. |
| TYPE | NO | Specifies the type of the condition. Possible values are: |
| | | LESSTHAN |
| | | MORETHAN |
| | | EQUALS |
| | | ISNUMERIC |
| | | ISALPHA |
| | | ISEMAIL |
| | | ISFORMAT |
| | | MAXCHARS |
| | | MINCHARS |
| VALUE | Depends on TYPE | The value that EVAL will be evaluated against. Not relevant for all conditions. |

The following is a description of each of the supported conditions:
- EQUALS, this function will take an input and a value to evaluate the input against. If the two items are determined to be Equal, the condition will return true. If they are not equal, the condition will return false. The value and the input must be of the same data type, otherwise the condition will return false. Memo values will be treated as a string and auto-increment types will be treated as integers. The following criteria will be used to determine equality:
   o Two strings are equal if each of the characters in the strings is identical and the strings have the same number of characters. The string comparison will not be case sensitive.
   o Two integers are equal if their values are mathematically equal.
- MORETHAN, this function will take an input and a value to evaluate the input against. If the input is determined to be greater in value than the evaluation value, the condition will return true. If the values are equal, false is returned. If the evaluation value is determined to be greater than the input, the function will return false. The evaluation value and the input must be of the same data type, otherwise an error condition will occur. Memo values will be treated as a string and the auto-increment type will be treated as an integer. The following criteria will be used to determine which value is greater:
   o String A is more in value than String B if String A occurs before String B in alphabetical order.
   o Integer A is greater than Integer B if A > B, mathematically.
- LESSTHAN, this function will take an input and a value to evaluate the input against. If the input is determined to be lesser in value than the evaluation value, the condition will return true. If the values are equal, false is returned. If the evaluation value is determined to be lesser than the input, the function will return false. The evaluation value and the input must be of the same data type, otherwise an error condition will occur. Memo values will be treated as a string and the auto-increment type will be treated as an integer. The following criteria will be used to determine which value is greater:
   o String A is lesser in value than String B if String A occurs after String B in alphabetical order.
   o Integer A is greater than Integer B if A < B, mathematically.
- ISNUMERIC, this function will take an input and evaluate whether or not it is a value number. If the input can be converted successfully to a number, the function will return true. If the input cannot be converted to a number, the function will return false. All input values will be treated as a string data type.
- ISALPHA, this function will take an input and evaluate whether or not it contains only alphabetic characters. Alphabetic characters are defined as all characters from A-Z, a-z" and spaces. All input values will be treated as a string data type.
- ISEMAIL, this function will take an input and evaluate whether or not it contains a string of the form *something@something.* All input values will be treated as a string data type.
- ISFORMAT, this function will take an input and a value to evaluate the input against. If the input is determined to be formatted as the evaluation value, the condition will return true. If the evaluation value is determined to be formatted differently than the input, the function will return false. The evaluation value must comply with the ARML formatting standards.
- MAXCHARS, this function will take an input and evaluate whether or not the number of characters in the string is less than or equal to the evaluation value passed into the function. If the number of characters in the string is less than or equal to the evaluation value, true is returned. If the number of characters in the string is greater than the evaluation value, false is returned. All input values will be treated as a string data type.
- MINCHARS, this function will take an input and evaluate whether or not the number of characters in the string is greater than or equal to the evaluation value passed into the function. If the number of characters in the string is greater than or equal to the evaluation value, true is returned. If the number of characters in the string is less than the evaluation value, false is returned. All input values will be treated as a string data type.

### Example:

```
 <ACTION TYPE="IF'>
      <COND EVAL="[QUERY 1.STRREAD]" TYPE="EQUALS" VALUE="READ"></COND>
      <IFLIST>
             <ACTION TYPE="SAVE"></ACTION>
             <ACTION TYPE="OPEN" NAME="INBOX" NEWINST="FALSE"></ACTION>
      </IFLIST>
      <ELSELIST>
             <ACTION TYPE="OPEN" NAME="MSGREAD" NEWINST="FALSE"></ACTION>
      </ELSELIST>
 </ACTION>
```

### Example of airix event model

The following example serves to illustrate how a screen is used to compose a data package to be sent back to the AIRIX server. The example used is a screen giving the bare functionality for composing a basic email message - to simplify the example, the user cannot cancel the action, and multiple recipients are not allowed.

```
 <ARML>
   <SCREEN NAME="NewMsg">
      <BUTTONS>
          <BTN NAME="OK" CAPTION="Send" INDEX="0">
              <EVENTS>
                 <EVENT TYPE="MODIFY">
                     <ACTION TYPE="ARML">
                        <ARMLTEXT>
                            <BODY TYPE="ME">
                                <ME MSGID="1" FROM="Tim Neil"
                                   SUBJECT="[SP.NewMsg.Subject]">
                                   <DATA>[SP.NewMsg.Body]</DATA>
                                   <RECIPS>
                                    <RCP MSGID="1"
                    TO="[SP.NewMsg.To]"></RCP>
                                   <//RECIPS>
                               </ME>
                            </BODY>
                        </ARMLTEXT>
                    </ACTION>
                 </EVENT>
             </EVENTS>
          </BTN>
      </BUTTONS>
      <EDITBOXES>
          <EB NAME="To" INDEX="1"></EB>
          <EB NAME="Subject" INDEX="2"></EB>
          <EB NAME="Body" INDEX="3"></EB>
      </EDITBOXES>
  </SCREEN>
 </ARML>
```

The Editboxes section at the bottom defines 3 editboxes, with the names of 'To', 'Subject', and 'Body';

```
          <EB NAME="To" INDEX="1"></EB>
          <EB NAME="Subject" INDEX="2"></EB>
          <EB NAME="Body" INDEX="3"></EB>
```

There is one button on the screen, with the name of 'OK';

```
          <BTN NAME="OK" CAPTION="Send" Index="0">
```

When the user clicks on OK, the button composes an ARML package to be sent to the AIRIX server;

```
              <EVENT>
                 <ACTION TYPE="ARML">
```

The ARML package sent is an 'ME' package as described in the example in section 4.2.1. It is composed as follows;

```
                         <BODY TYPE="ME">
                            <ME MSGID="1" FROM="Tim Neil"
                                SUBJECT="[SP.NewMsg.Subject]">
                                <DATA>[SP.NewMsg.Body]</DATA>
                                <RECIPS>
                                   <RCP MSGID="1" TO="[SP.NewMsg.To]"></RCP>
                                </RECIPS>
                            </ME>
                        </BODY>
```

The subject field is taken from the edit box named 'Subject';

```
      <ME MSGID="1" FROM="Tim Neil" SUBJECT="[SP.NewMsg.Subject]">
```

The recipients field is taken from the edit box named 'Subject';

```
      <RECIPS>
          <RCP MSGID="1" TO="[SP.NewMsg.To]"></RCP>
      </RECIPS>
```

Finally the text of the message is filled from the 'Body' field;

```
      <DATA>[SP.NewMsg.Body]</DATA>
```

### 7 AVM-SERVER SYSTEM INTERACTIONS

This section describes the primitives that are used for system-level interactions that the AIRIX Smart Client has with the AIRIX server.

### 7.1 General

### 7.1.1 Description

System level packages are sent between AIRIX and the AVM (wirelessly).

### 7.1.2 Structure

System interactions are performed by exchanging ARML data packages with the following structure;

```
 <ARML>
 <HEAD>... </HEAD>
 <SYS>
 {data}
 </SYS>
 </ARML>
```

### 7.1.3 Tags

### 7.1.3.1 The <HEAD> tag

The package header is delimited by the <HEAD>...</HEAD> tags. Contained in text between the two tags is the id of the destination mobile. The HEAD tag has the following attributes;

| Attribute | Optional? | Description |
|---|---|---|
| DT | No | The date & time in RFC 1123 format (including time zone) |
| ID | No | A unique ID for the message |
| VERSION | No | The version number of the application (currently "2.0") |
| APPNAME | No | The application name ("0" for System Messages) |
| DEVICE | No | A numeric constant identifying the device |
| PID | Yes | A unique value used to designate a device. |
| AVMV | No | The version number of the Smart Client. |

### 7.1.3.2 The <SYS> tag

The <SYS>...</SYS> pair contains the actual system package. The tag does not have any attributes.

### 7.2 Device Registration & deregistration package

### 7.2.1 Description

Device registration packages are sent from the AVM to the AIRIX server when a user registers their device.

### 7.2.2 Structure

A device registration package has the following structure;

```
 {wrapper tags}
 <REG>
      <USERNAME> {data} </USERNAME>
      <PASSWORD> {data} </PASSWORD>
 </REG>
 { wrapper tags}
```

### 7.2.3 Tags

### 7.2.3.1 The <REG> tag

The <REG>...</REG> pair delimit the registration request. The tag has no attributes. 7.2.3.2 The <USERNAME> tag

The <USERNAME>...</ USERNAME > pair contain the user name. The tag does not have any attributes.

### 7.2.3.3 The <PASSWORD> tag

The <PASSWORD>...</PASSWORD> pair contain the password. The tag does not have any attributes.

### 7.2.4 Example

This package would be sent by a user, to register their device under a given name;

```
 {wrapper tags}
 <REG>
      <USERNAME>SUNTRESS</USERNAME>
      <PASSWORD>MYPASS</PASSWORD>
 </REG>
 {wrapper tags}
```

### 7.3 Registration confirmation package

### 7.3.1 Description

This packages is sent back from the AIRIX server to the AVM to confirm that the device has been registered.

### 7.3.2 Structure

A registration confirmation package has the following structure;

```
 {wrapper tags}
 <REGCONFTRM>
      <VALUE> {data} <VALUE>
      <APPS>
             <APP></APP>
             <APP></APP>
      </APPS>
 </REGCONFIRM>
 {wrapper tags}
```

### 7.3.3 Tags

### 7.3.3.1 The <REGCONFIRM> tag

The <REGCONFIRM>...</REGCONFIRM> pair delimit the confirmation. The tag has no attributes.

### 7.3.3.2 The <VALUE> tag

The <VALUE>...</VALUE> pair contains the status of the registration request. The following text strings are allowable;
CONFIRM - this means that the registration request was successful
NOTREGPLATFORM - this means that the registration request failed because the device is not registered for the platform
INVALIDUSERPASS - this means that the registration request failed because the user name or password was not valid
NODEVICE - this means that the registration request failed because the device was not registered previously by an application

### 7.3.3.3 The <APPS> tag

The <APPS>...</APPS> pair contains a list of applications for the device.

### 7.3.3.4 The <APP> tag

The <APP>...</APP> pair contains an application header. It has the following attributes;

| Attribute | Optional? | Description |
|---|---|---|
| ID | No | The application ID |
| NAME | No | The name of the application |
| DESCRIPTION | No | A text description of the application |
| REG | No | 'YES' if the user is registered for this application. 'NO' if they are not. |

### 7.3.4 Example

This package would be sent to confirm the example request in section 7.2.4;

```
 {wrapper tags}
 <REGCONFIRM>
       <VALUE>CONFIRM</VALUE>
       <APPS>
          <APP ID="4" NAME="EMAIL" DESCRIPTION="E-Mail Application" REG="YES">
          <APP ID="22" NAME="STOCKS" DESCRIPTION="Stock Quotes" REG="NO">
       </APPS>
 </REGCONFIRM>
 {wrapper tags}
```

### 7.4 Find applications package

### 7.4.1 Description

Find applications packages are sent from the AIRIX component to the AIRIX server when a user wishes to refresh their list of applications on a device

### 7.4.2 Structure

A device registration package has the following structure;

```
 {wrapper tags}
 <FINDAPPS>
 </FINDAPPS>
 {wrapper tags}
```

### 7.4.3 Tags

### 7.4.3.1 The <FINDAPPS> tag

The <FINDAPPS>...</FINDAPPS> pair delimit the application registration request. It has no attributes.

### 7.5 Find applications confirmation package

### 7.5.1 Description

This package is sent back from the AIRIX server to the AVM to and contains a list of applications available for the user

### 7.5.2 Structure

A registration confirmation package has the following structure;

```
 {wrapper tags}
 <FINDAPPSCONFIRM>
     <APPS>
             <APP></APP>
             <APP></APP>
     </APPS>
 </FINDAPPSCONFIRM>
 {wrapper tags}
```

### 7.5.3 Tags

### 7.5.3.1 The <FINDAPPSCONFIRM> tag

The <FINDAPPSCONFIRM>...</FINDAPPSCONFIRM> pair delimit the confirmation. The tag has no attributes.

### 7.5.3.2 The <APPS> tag

The <APPS>...</APPS> pair contains a list of applications for the device.

### 7.5.3.3 The <APP> tag

The <APP>...</APP> pair contains an application header. It has the following attributes;

| Attribute | Optional? | Description |
|---|---|---|
| ID | No | The application ID |
| NAME | No | The name of the application |
| DESCRIPTION | No | A text description of the application |
| REG | No | 'YES' if the user is registered for the application. 'NO' if they are not. |

### 7.6 Application Registration & deregistration package

### 7.6.1 Description

Application registration packages are sent from the AIRIX component to the AIRIX server when a user wishes to register or deregister for an application.

### 7.6.2 Structure

A device registration package has the following structure;

```
 {wrapper tags}
 <APPREG>
 </APPREG>
 {wrapper tags}
```

### 7.6.3 Tags

### 7.6.3.1 The <APPREG> tag

The <APPREG>...</APPREG> pair delimit the application registration request. The tag has the following attributes;

| Attribute | Optional? | Description |
|---|---|---|
| TYPE | No | This defines the type of parameter. It can take two values; |
| | | ADD - this means that the application is to be added to the registration database |
| | | DELETE - this means that the application is to be removed to the registration database |
| ID | No | The ID of the application being registered/deregistered |

### 7.7 Application registration & deregistration confirmation package

### 7.7.1 Description

This packages is sent back from the AIRIX server to the AVM to confirm that the applicaiton has been registered or deregistered.

### 7.7.2 Structure

A registration confirmation package has the following structure (note that for DELETE types, the <INTERFACE>...</INTERFACE> section will not be included);

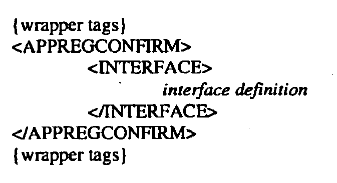

### 7.7.3 Tags

### 7.7.3.1 The <APPREGCONFIRM> tag

The <APPREGCONFIRM>...</APPREGCONFIRM> pair delimit the confirmation. The tag has the following attributes;

| Attribute | Optional? | Description |
|---|---|---|
| TYPE | No | This defines the type of parameter. It can take two values; |
| | | ADD - this means that the application is to be added to the registration database |
| | | DELETE - this means that the application is to be removed to the registration database |
| ID | Yes | The ID of the application being returned (if any) |

### 7.7.3.2 The <INTERFACE> tag

The <INTERFACE>...</INTERFACE> pair delimit the interface definition. The tag has the no attributes, and contains an interface definition as laid out in section 3. Note that instead of the <DEVICES>...</DEVICES> tags in section 0, it will be replaced by <SCREENS>...<SCREENS> with the screen definitions for only the one device that the interface is being sent to (see section 3.4.3.2 for the definition of the <SCREENS> tag). This section will not be sent for APPREGCONFIRM messages of TYPE="DELETE".

### 7.7.4 Example

The following example shows the application confirmation with screen definitions for an application that allows a user to view their inbox and the mails in it.

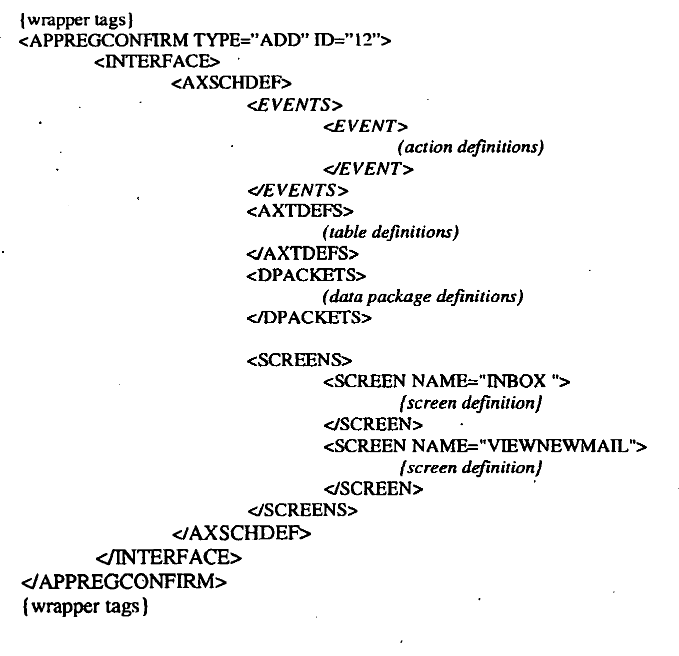

### 7.8 Setting the active device package

### 7.8.1 Description

If a user wishes to set the current device as their active device, the AVM must send a 'set active device' package to the AIRIX server

### 7.8.2 Structure

A 'set active device' package has the following structure;

```
 {wrapper tags}
 <SA>
 {data}
 </SA>
 {wrapper tags}
```

### 7.8.3 Tags

### 7.8.3.1 The <SA> tag

The 'set active device' package is shown by the <SA>...</SA> tags. The tag has no attributes; the tag pair contains the user's username

### 7.8.4 Example

This package would be sent by a user with the username of 'scotty';

```
 {wrapper tags)
 <SA>scotty</SA>
 {wrapper tags}
```

### 7.9 Set active device response

### 7.9.1 Description

This packages is sent back from the AIRIX server to the client in response to a request to set the current device as the active one.

### 7.9.2 Structure

A 'set active device response' package has the following structure;

```
 {wrapper tags}
 <SACONFIRM>
      <VALUE> (data) </VALUE>
 </SACONFIRM>
 {wrapper tags}
```

### 7.9.3 Tags

### 7.9.3.1 The <SACONFIRM> tag

The <SACONFIRM>...</SACONFIRM> pair delimit the confirmation. The tag does not have any attributes.

### 7.9.3.2 The <VALUE> tag

The <VALUE>...</VALUE> pair contains the status of the registration request. The following text strings are allowable;
CONFIRM - this means that the registration request was successful
NOTREGISTERED - this means that the registration request failed because

### 7.9.4 Example

This package would be sent by the AIRIX server to confirm a set active request;

```
 { wrapper tags}
 <SACONFTRM>
      <VALUE>CONPIRM</VALUE>
 </SACONFIRM>
 {wrapper tags}
```

### 7.10 Invalid Application package

### 7.10.1 Description

This package is sent back from the AIRIX server to the AVM in response to a request to interact with an application that is no longer registered with AIRIX.

### 7.10.2 Structure

An 'invalid application' package has the following structure;

```
 (wrapper tags)
 <NOAPP>
      <VALUE> {data} </VALUE>
 </NOAPP>
 {wrapper tags}
```

### 7.10.3 Tags

### 7.10.3.1 The <NOAPP> tag

The <NOAPP>...</NOAPP> pair delimit the confirmation. The tag has no attributes.

### 7.10.3.2 The <VALUE> tag

The <VALUE>...</VALUE> pair delimit the return code. It can only be
NOAPPLICATION - Application not found.

### 7.10.4 Example

This package would be sent in response to a request if the application cannot be found;

```
 {wrapper tags}
 <NOAPP>
      <VALUE>NOAPPLICATION</VALUE>
 </NOAPP>
 {wrapper tags}
```

### 8 APPLICATION-SERVER SYSTEM INTERACTIONS

The section that defines Application to server system interactions has been made obsolete by the document "AIRIX Polling XML Language Specification". It describes an XML-HTTP interface to AIRIX using POST and GET commands to a web-based ISAPI DLL.

### 9 ARML FUTURE DEVELOPMENTS

The following enhancements to ARML are planned;
- Tokenisation
- Support for on-line help
- Compression techniques
- Enhanced editboxes
   o input masks
   o multi-value entry
- Multiple selection list boxes
- A per-application splash screen

## Claims

1. A machine-readable medium comprising:
object-oriented code for defining a database query based on at least one markup language element representing said database query, said object-oriented code including instructions for causing said database query to be performed and instructions for storing a result of said database query;
object-oriented code for displaying a user interface screen having a display element that is based at least in part upon said result of said database query, said user interface screen being based on at least one markup language element representing said user interface screen;
object-oriented code for refreshing said user interface screen based on a markup language element representing said refreshing of said user interface screen; and
object-oriented code for refreshing said database query based on a markup language element representing said refreshing of said database query,
wherein said object-oriented code for refreshing said user interface screen and said object-oriented code for refreshing said database query are capable of mutually exclusive instantiation based upon a user specification of one of said markup language element representing said refreshing of said user interface screen and said markup language element representing said refreshing of said database query.

2. The machine-readable medium of claim 1 wherein said object-oriented code for refreshing said user interface screen and said object-oriented code for refreshing said database query are capable of mutually exclusive execution based upon said user specification of one of said markup language element representing said refreshing of said user interface screen and said markup language element representing said refreshing of said database query.

3. The machine-readable medium of claim 2 wherein both of said object-oriented code for refreshing said database query and said object-oriented code for refreshing said user interface screen are defined within a single object-oriented class.

4. The machine-readable medium of claim 3 wherein said instantiation of said object-oriented code for refreshing said user interface screen comprises instantiating a first instance of said object-oriented class and setting data members of said first instance based on attributes of the markup language element representing said refreshing of said user interface screen, and wherein said instantiation of said object-oriented code for refreshing said database query comprises instantiating a second instance of said object-oriented class and setting said data members of said second instance based on attributes of the markup language element representing said refreshing of said database query.

5. The machine-readable medium of claim 2 wherein said object-oriented code for refreshing said database query is defined within a first object-oriented class and said object-oriented code for refreshing said user interface screen is defined within a second object-oriented class.

6. The machine-readable medium of claim 5 wherein said instantiation of said object-oriented code for refreshing said user interface screen comprises instantiating an instance of said first object-oriented class and setting data members of said instance based on attributes of the markup language element representing said refreshing of said user interface screen, and wherein said instantiation of said object-oriented code for refreshing said database query comprises instantiating an instance of said second object-oriented class and setting data members of said instance of said second object-oriented class based on attributes of the markup language element representing said refreshing of said database query.

7. The machine-readable medium of claim 1 wherein said markup language element representing said refreshing of said user interface screen and said markup language element representing said refreshing of said database query are both instances of the same markup language element, each instance having at least one attribute whose value differs from a value of a corresponding attribute of the other instance.

8. A wireless communication device comprising:
a processor; and
a memory coupled to said at least one processor, storing:
object-oriented code for defining a database query based on at least one markup language element representing said database query, said object-oriented code including instructions for causing said database query to be performed and instructions for storing a result of said database query;
object-oriented code for displaying a user interface screen having a display element that is based at least in part upon said result of said database query, said user interface screen being based on at least one markup language element representing said user interface screen;
object-oriented code for refreshing said user interface screen based on a markup language element representing said refreshing of said user interface screen; and
object-oriented code for refreshing said database query based on a markup language element representing said refreshing of said database query,
wherein said object-oriented code for refreshing said user interface screen and said object-oriented code for refreshing said database query are capable of mutually exclusive instantiation based upon a user specification of one of said markup language element representing said refreshing of said user interface screen and said markup language element representing said refreshing of said database query.

9. The device of claim 8 wherein said object-oriented code for refreshing said user interface screen and said object-oriented code for refreshing said database query are capable of mutually exclusive execution based upon said user specification of one of said markup language element representing said refreshing of said user interface screen and said markup language element representing said refreshing of said database query.

10. The device of claim 9 wherein both of said object-oriented code for refreshing said database query and said object-oriented code for refreshing said user interface screen are defined within a single object-oriented class.

11. The device of claim 10 wherein said instantiation of said object-oriented code for refreshing said user interface screen comprises instantiating a first instance of said object-oriented class and setting data members of said first instance based on attributes of the markup language element representing said refreshing of said user interface screen, and wherein said instantiation of said object-oriented code for refreshing said database query comprises instantiating a second instance of said object-oriented class and setting said data members of said second instance based on attributes of the markup language element representing said refreshing of said database query.

12. The device of claim 9 wherein said object-oriented code for refreshing said database query is defined within a first object-oriented class and said object-oriented code for refreshing said user interface screen is defined within a second object-oriented class.

13. The device of claim 12 wherein said instantiation of said object-oriented code for refreshing said user interface screen comprises instantiating an instance of said first object-oriented class and setting data members of said instance based on attributes of the markup language element representing said refreshing of said user interface screen, and wherein said instantiation of said object-oriented code for refreshing said database query comprises instantiating an instance of said second object-oriented class and setting data members of said instance of said second object-oriented class based on attributes of the markup language element representing said refreshing of said database query.

14. The device of claim 8 wherein said markup language element representing said refreshing of said user interface screen and said markup language element representing said refreshing of said database query are both instances of the same markup language element, each instance having at least one attribute whose value differs from a value of a corresponding attribute of the other instance.

## Patentansprüche

1. Maschinenlesbares Medium, umfassend:
objektorientierten Code zum Definieren einer Datenbankabfrage auf der Basis von mindestens einem Markierungssprachenelement, das diese Datenbankabfrage repräsentiert, wobei der objektorientierte Code Anweisungen, welche die Durchführung der Datenbankabfrage bewirken, sowie Anweisungen zum Speichern eines Ergebnisses der Datenbankabfrage enthält;
objektorientierten Code zum Anzeigen einer grafischen Benutzeroberfläche, die über ein Anzeigeelement verfügt, das zumindest teilweise auf dem Ergebnis der Datenbankabfrage basiert, wobei die grafische Benutzeroberfläche auf mindestens einem Markierungssprachenelement basiert, welches die grafische Benutzeroberfläche repräsentiert;
objektorientierten Code zum Auffrischen der grafischen Benutzeroberfläche auf der Basis eines Markierungssprachenelements, welches das Auffrischen der grafischen Benutzeroberfläche repräsentiert; und
objektorientierten Code zum Auffrischen der Datenbankabfrage auf der Basis eines Markierungssprachenelements, welches das Auffrischen der Datenbankabfrage repräsentiert,
wobei der objektorientierte Code zum Auffrischen der grafischen Benutzeroberfläche und der objektorientierte Code zum Auffrischen der Datenbankabfrage die Fähigkeit besitzen zur gegenseitig ausschließenden Instantiierung auf der Basis einer Benutzerfestlegung von einem des Markierungssprachenelements, welches das Auffrischen der grafischen Benutzeroberfläche repräsentiert, und des Markierungssprachenelements, welches das Auffrischen der Datenbankabfrage repräsentiert.

2. Maschinenlesbares Medium gemäß Anspruch 1, wobei der objektorientierte Code zum Auffrischen der grafischen Benutzeroberfläche und der objektorientierte Code zum Auffrischen der Datenbankabfrage die Fähigkeit besitzen zur gegenseitig ausschließenden Ausführung auf der Basis der Benutzerfestlegung von einem des Markierungssprachenelements, welches das Auffrischen der grafischen Benutzeroberfläche repräsentiert, und des Markierungssprachenelements, welches das Auffrischen der Datenbankabfrage repräsentiert.

3. Maschinenlesbares Medium gemäß Anspruch 2, wobei sowohl der objektorientierte Code zum Auffrischen der Datenbankabfrage als auch der objektorientierte Code zum Auffrischen der grafischen Benutzeroberfläche innerhalb einer einzigen objektorientierten Klasse definiert sind.

4. Maschinenlesbares Medium gemäß Anspruch 3, wobei die Instantiierung des objektorientierten Codes zum Auffrischen der grafischen Benutzeroberfläche das Instantiieren einer ersten Instanz der objektorientierten Klasse und das Festlegen von Datenmitgliedern der ersten Instanz auf der Basis von Attributen des Markierungssprachenelements umfasst, welches das Auffrischen der grafischen Benutzeroberfläche repräsentiert, und wobei die Instantiierung des objektorientierten Codes zum Auffrischen der Datenbankabfrage das Instantiieren einer zweiten Instanz der objektorientierten Klasse und das Festlegen der Datenmitglieder der zweiten Instanz auf der Basis von Attributen des Markierungssprachenelements umfasst, welches das Auffrischen der Datenbankabfrage repräsentiert.

5. Maschinenlesbares Medium gemäß Anspruch 2, wobei der objektorientierte Code zum Auffrischen der Datenbankabfrage innerhalb einer ersten objektorientierten Klasse definiert ist und der objektorientierte Code zum Auffrischen der grafischen Benutzeroberfläche innerhalb einer zweiten objektorientierten Klasse definiert ist.

6. Maschinenlesbares Medium gemäß Anspruch 5, wobei die Instantiierung des objektorientierten Codes zum Auffrischen der grafischen Benutzeroberfläche das Instantiieren einer Instanz der ersten objektorientierten Klasse und das Festlegen von Datenmitgliedern dieser Instanz auf der Basis von Attributen des Markierungssprachenelements umfasst, welches das Auffrischen der grafischen Benutzeroberfläche repräsentiert, und wobei die Instantiierung des objektorientierten Codes zum Auffrischen der Datenbankabfrage das Instantiieren einer Instanz der zweiten objektorientierten Klasse und das Festlegen der Datenmitglieder dieser Instanz der zweiten objektorientierten Klasse auf der Basis von Attributen des Markierungssprachenelements umfasst, welches das Auffrischen der Datenbankabfrage repräsentiert.

7. Maschinenlesbares Medium gemäß Anspruch 1, wobei sowohl das Markierungssprachenelement, welches das Auffrischen der grafischen Benutzeroberfläche repräsentiert, als auch das Markierungssprachenelement, welches das Auffrischen der Datenabfrage repräsentiert, Instanzen desselben Markierungssprachenelements sind, wobei jede Instanz über mindestens ein Attribut verfügt, dessen Wert von einem Wert eines entsprechenden Attributs der anderen Instanz abweicht.

8. Drahtloskommunikationsgerät, umfassend:
einen Prozessor; und
einen mit dem mindestens einen Prozessor gekoppelten Speicher zum Speichern von:
objektorientiertem Code zum Definieren einer Datenbankabfrage auf der Basis von mindestens einem Markierungssprachenelement, das diese Datenbankabfrage repräsentiert, wobei der objektorientierte Code Anweisungen, welche die Durchführung der Datenbankabfrage bewirken, sowie Anweisungen zum Speichern eines Ergebnisses der Datenbankabfrage enthält;
objektorientiertem Code zum Anzeigen einer grafischen Benutzeroberfläche, die über ein Anzeigeelement verfügt, das zumindest teilweise auf dem Ergebnis der Datenbankabfrage basiert, wobei die grafische Benutzeroberfläche auf mindestens einem Markierungssprachenelement basiert, welches die grafische Benutzeroberfläche repräsentiert;
objektorientiertem Code zum Auffrischen der grafischen Benutzeroberfläche auf der Basis eines Markierungssprachenelements, welches das Auffrischen der grafischen Benutzeroberfläche repräsentiert; und
objektorientiertem Code zum Auffrischen der Datenbankabfrage auf der Basis eines Markierungssprachenelements, welches das Auffrischen der Datenbankabfrage repräsentiert,
wobei der objektorientierte Code zum Auffrischen der grafischen Benutzeroberfläche und der objektorientierte Code zum Auffrischen der Datenbankabfrage die Fähigkeit besitzt zur gegenseitig ausschließenden Instantiierung auf der Basis einer Benutzerfestlegung von einem des Markierungssprachenelements, welches das Auffrischen der grafischen Benutzeroberfläche repräsentiert, und des Markierungssprachenelements, welches das Auffrischen der Datenbankabfrage repräsentiert.

9. Gerät gemäß Anspruch 8, wobei der objektorientierte Code zum Auffrischen der grafischen Benutzeroberfläche und der objektorientierte Code zum Auffrischen der Datenbankabfrage die Fähigkeit besitzen zur gegenseitig ausschließenden Ausführung auf der Basis der Benutzerfestlegung von einem des Markierungssprachenelements, welches das Auffrischen der grafischen Benutzeroberfläche repräsentiert, und des Markierungssprachenelements, welches das Auffrischen der Datenbankabfrage repräsentiert.

10. Gerät gemäß Anspruch 9, wobei sowohl der objektorientierte Code zum Auffrischen der Datenbankabfrage als auch der objektorientierte Code zum Auffrischen der grafischen Benutzeroberfläche innerhalb einer einzigen objektorientierten Klasse definiert sind.

11. Gerät gemäß Anspruch 10, wobei die Instantiierung des objektorientierten Codes zum Auffrischen der grafischen Benutzeroberfläche das Instantiieren einer ersten Instanz der objektorientierten Klasse und das Festlegen von Datenmitgliedern der ersten Instanz auf der Basis von Attributen des Markierungssprachenelements umfasst, welches das Auffrischen der grafischen Benutzeroberfläche repräsentiert, und wobei die Instantiierung des objektorientierten Codes zum Auffrischen der Datenbankabfrage das Instantiieren einer zweiten Instanz der objektorientierten Klasse und das Festlegen der Datenmitglieder der zweiten Instanz auf der Basis von Attributen des Markierungssprachenelements umfasst, welches das Auffrischen der Datenbankabfrage repräsentiert.

12. Gerät gemäß Anspruch 9, wobei der objektorientierte Code zum Auffrischen der Datenbankabfrage innerhalb einer ersten objektorientierten Klasse definiert ist und der objektorientierte Code zum Auffrischen der grafischen Benutzeroberfläche innerhalb einer zweiten objektorientierten Klasse definiert ist.

13. Gerät gemäß Anspruch 12, wobei die Instantiierung des objektorientierten Codes zum Auffrischen der grafischen Benutzeroberfläche das Instantiieren einer Instanz der ersten objektorientierten Klasse und das Festlegen von Datenmitgliedern dieser Instanz auf der Basis von Attributen des Markierungssprachenelements umfasst, welches das Auffrischen der grafischen Benutzeroberfläche repräsentiert, und wobei die Instantiierung des objektorientierten Codes zum Auffrischen der Datenbankabfrage das Instantiieren einer Instanz der zweiten objektorientierten Klasse und das Festlegen der Datenmitglieder dieser Instanz der zweiten objektorientierten Klasse auf der Basis von Attributen des Markierungssprachenelements umfasst, welches das Auffrischen der Datenbankabfrage repräsentiert.

14. Gerät gemäß Anspruch 8, wobei sowohl das Markierungssprachenelement, welches das Auffrischen der grafischen Benutzeroberfläche repräsentiert, als auch das Markierungssprachenelement, welches das Auffrischen der Datenabfrage repräsentiert, Instanzen desselben Markierungssprachenelements sind, wobei jede Instanz über mindestens ein Attribut verfügt, dessen Wert von einem Wert eines entsprechenden Attributs der anderen Instanz abweicht.

## Revendications

1. Support lisible par machine comprenant :
un code orienté objet pour définir une requête de base de données basée sur au moins un élément de langage de balisage qui représente ladite requête de base de données, ledit code orienté objet comprenant des instructions pour faire que ladite requête de base de données soit réalisée et des instructions pour stocker un résultat de ladite requête de base de données ;
un code orienté objet pour afficher un écran d'interface utilisateur ayant un élément d'affichage qui est basé au moins en partie sur ledit résultat de ladite requête de base de données, ledit écran d'interface utilisateur étant basé sur au moins un élément de langage de balisage qui représente ledit écran d'interface utilisateur ;
un code orienté objet pour actualiser ledit écran d'interface utilisateur en fonction d'un élément de langage de balisage qui représente ladite actualisation dudit écran d'interface utilisateur ; et
un code orienté objet pour actualiser ladite requête de base de données en fonction d'un élément de langage de balisage qui représente ladite actualisation de ladite requête de base de données,
dans lequel ledit code orienté objet pour actualiser ledit écran d'interface utilisateur et ledit code orienté objet pour actualiser ladite requête de base de données peuvent s'instancier de manière mutuellement exclusive en fonction d'une spécification par l'utilisateur soit dudit élément de langage de balisage qui représente ladite actualisation dudit écran d'interface utilisateur soit dudit élément de langage de balisage qui représente ladite actualisation de ladite requête de base de données.

2. Support lisible par machine de la revendication 1 dans lequel ledit code orienté objet pour actualiser ledit écran d'interface utilisateur et ledit code orienté objet pour actualiser ladite requête de base de données peuvent s'exécuter de manière mutuellement exclusive en fonction de ladite spécification par l'utilisateur soit dudit élément de langage de balisage qui représente ladite actualisation dudit écran d'interface utilisateur soit dudit élément de langage de balisage qui représente ladite actualisation de ladite requête de base de données.

3. Support lisible par machine de la revendication 2 dans lequel ledit code orienté objet pour actualiser ladite requête de base de données et ledit code orienté objet pour actualiser ledit écran d'interface utilisateur sont définis dans une seule classe orientée objet.

4. Support lisible par machine de la revendication 3 dans lequel ladite instanciation dudit code orienté objet pour actualiser ledit écran d'interface utilisateur consiste à instancier une première instance de ladite classe orientée objet et à définir des membres de données de ladite première instance en fonction d'attributs de l'élément de langage de balisage qui représente ladite actualisation dudit écran d'interface utilisateur, et dans lequel ladite instanciation dudit code orienté objet pour actualiser ladite requête de base de données consiste à instancier une seconde instance de ladite classe orientée objet et à définir lesdits membres de données de ladite seconde instance en fonction d'attributs de l'élément de langage de balisage qui représente ladite actualisation de ladite requête de base de données.

5. Support lisible par machine de la revendication 2 dans lequel ledit code orienté objet pour actualiser ladite requête de base de données est défini dans une première classe orientée objet, et ledit code orienté objet pour actualiser ledit écran d'interface utilisateur est défini dans une seconde classe orientée objet.

6. Support lisible par machine de la revendication 5 dans lequel ladite instanciation dudit code orienté objet pour actualiser ledit écran d'interface utilisateur consiste à instancier une instance de ladite première classe orientée objet et à définir des membres de données de ladite instance en fonction d'attributs de l'élément de langage de balisage qui représente ladite actualisation dudit écran d'interface utilisateur, et dans lequel ladite instanciation dudit code orienté objet pour actualiser ladite requête de base de données consiste à instancier une instance de ladite seconde classe orientée objet et à définir des membres de données de ladite instance de ladite seconde classe orientée objet en fonction d'attributs de l'élément de langage de balisage qui représente ladite actualisation de ladite requête de base de données.

7. Support lisible par machine de la revendication 1 dans lequel ledit élément de langage de balisage qui représente ladite actualisation dudit écran d'interface utilisateur et ledit élément de langage de balisage qui représente ladite actualisation de ladite requête de base de données sont tous deux des instances du même élément de langage de balisage, chaque instance ayant au moins un attribut dont la valeur diffère d'une valeur d'un attribut correspondant de l'autre instance.

8. Dispositif de communications sans fil comprenant :
un processeur ; et
une mémoire couplée audit au moins un processeur stockant :
un code orienté objet pour définir une requête de base de données basée sur au moins un élément de langage de balisage qui représente ladite requête de base de données, ledit code orienté objet comprenant des instructions pour faire que ladite requête de base de données soit réalisée et des instructions pour stocker un résultat de ladite requête de base de données ;
un code orienté objet pour afficher un écran d'interface utilisateur ayant un élément d'affichage qui est basé au moins en partie sur ledit résultat de ladite requête de base de données, ledit écran d'interface utilisateur étant basé sur au moins un élément de langage de balisage qui représente ledit écran d'interface utilisateur ;
un code orienté objet pour actualiser ledit écran d'interface utilisateur en fonction d'un élément de langage de balisage qui représente ladite actualisation dudit écran d'interface utilisateur ; et
un code orienté objet pour actualiser ladite requête de base de données en fonction d'un élément de langage de balisage qui représente ladite actualisation de ladite requête de base de données,
dans lequel ledit code orienté objet pour actualiser ledit écran d'interface utilisateur et ledit code orienté objet pour actualiser ladite requête de base de données peuvent s'instancier de manière mutuellement exclusive en fonction d'une spécification par l'utilisateur soit dudit élément de langage de balisage qui représente ladite actualisation dudit écran d'interface utilisateur soit dudit élément de langage de balisage qui représente ladite actualisation de ladite requête de base de données.

9. Dispositif de la revendication 8 dans lequel ledit code orienté objet pour actualiser ledit écran d'interface utilisateur et ledit code orienté objet pour actualiser ladite requête de base de données peuvent s'exécuter de manière mutuellement exclusive en fonction de ladite spécification par l'utilisateur soit dudit élément de langage de balisage qui représente ladite actualisation dudit écran d'interface utilisateur soit dudit élément de langage de balisage qui représente ladite actualisation de ladite requête de base de données.

10. Dispositif de la revendication 9 dans lequel ledit code orienté objet pour actualiser ladite requête de base de données et ledit code orienté objet pour actualiser ledit écran d'interface utilisateur sont définis dans une seule classe orientée objet.

11. Dispositif de la revendication 10 dans lequel ladite instanciation dudit code orienté objet pour actualiser ledit écran d'interface utilisateur consiste à instancier une première instance de ladite classe orientée objet et à définir des membres de données de ladite première instance en fonction d'attributs de l'élément de langage de balisage qui représente ladite actualisation dudit écran d'interface utilisateur, et dans lequel ladite instanciation dudit code orienté objet pour actualiser ladite requête de base de données consiste à instancier une seconde instance de ladite classe orientée objet et à définir lesdits membres de données de ladite seconde instance en fonction d'attributs de l'élément de langage de balisage qui représente ladite actualisation de ladite requête de base de données.

12. Dispositif de la revendication 9 dans lequel ledit code orienté objet pour actualiser ladite requête de base de données est défini dans une première classe orientée objet, et ledit code orienté objet pour actualiser ledit écran d'interface utilisateur est défini dans une seconde classe orientée objet.

13. Dispositif de la revendication 12 dans lequel ladite instanciation dudit code orienté objet pour actualiser ledit écran d'interface utilisateur consiste à instancier une instance de ladite première classe orientée objet et à définir des membres de données de ladite instance en fonction d'attributs de l'élément de langage de balisage qui représente ladite actualisation dudit écran d'interface utilisateur, et dans lequel ladite instanciation dudit code orienté objet pour actualiser ladite requête de base de données consiste à instancier une instance de ladite seconde classe orientée objet et à définir des membres de données de ladite instance de ladite seconde classe orientée objet en fonction d'attributs de l'élément de langage de balisage qui représente ladite actualisation de ladite requête de base de données.

14. Dispositif de la revendication 8 dans lequel ledit élément de langage de balisage qui représente ladite actualisation dudit écran d'interface utilisateur et ledit élément de langage de balisage qui représente ladite actualisation de ladite requête de base de données sont tous deux des instances du même élément de langage de balisage, chaque instance ayant au moins un attribut dont la valeur diffère d'une valeur d'un attribut correspondant de l'autre instance.
